(19) Europäisches Patentamt
European Patent Office
Office européen des brevets

(11) **EP 4 323 963 B1**

(12) **EUROPEAN PATENT SPECIFICATION**

(45) Date of publication and mention
of the grant of the patent:
**08.04.2026 Bulletin 2026/15**

(21) Application number: **21940455.5**

(22) Date of filing: **27.09.2021**

(51) International Patent Classification (IPC):
***G06T 7/246*** *(2017.01)*

(52) Cooperative Patent Classification (CPC):
**G06N 3/045; G06N 3/0464; G06N 3/09;
G06V 10/25; G06V 10/62; G06V 10/993;
G06V 20/46; G06V 20/54; G06V 20/625;
G06V 30/10;** G06N 3/08

(86) International application number:
**PCT/CN2021/121064**

(87) International publication number:
**WO 2022/242008 (24.11.2022 Gazette 2022/47)**

(54) **METHODS AND SYSTEMS FOR VEHICLE DETECTION**

VERFAHREN UND SYSTEME ZUR FAHRZEUGDETEKTION

PROCÉDÉS ET SYSTÈMES DE DÉTECTION DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2021 CN 202110553813**

(43) Date of publication of application:
**21.02.2024 Bulletin 2024/08**

(73) Proprietor: **Zhejiang Dahua Technology Co., Ltd.
Hangzhou, Zhejiang 310053 (CN)**

(72) Inventors:
• **HAO, Xingmeng
Hangzhou, Zhejiang 310053 (CN)**
• **SHU, Mei
Hangzhou, Zhejiang 310053 (CN)**

(74) Representative: **Wang, Bo
Panovision IP
Ebersberger Straße 3
85570 Markt Schwaben (DE)**

(56) References cited:
CN-A- 110 728 843    CN-A- 111 383 460
CN-A- 111 898 485    CN-A- 112 115 904
CN-A- 112 115 904    CN-A- 112 651 398
JP-A- 2004 234 486

**EP 4 323 963 B1**

## Description

This application claims priority to Chinese Patent Application No. 202110553813.3, filed on May 20, 2021

### TECHNICAL FIELD

The present disclosure relates to the field of image processing, and in particular to a method and a system for vehicle detection.

### BACKGROUND

An intelligent traffic system (ITS), vehicles may be monitored and identified in various traffic scenarios, for example, various entrances and exits at e.g., electric police checkpoints, parking lots, roads, etc., to acquire traffic information, such as charging information, traffic flow information, etc. To monitor and identify vehicles better, it is necessary to provide systems and methods for detecting vehicles efficiently and accurately from a video.

Acknowledged are:

CN 112 115 904 A (ZHEJIANG DAHUA TECHNOLOGY CO) 22 December 2020 (2020-12-22)JP 2004 234486 A (MATSUSHITA ELECTRIC IND CO LTD) 19 August 2004 (2004-08-19)

### BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting exemplary embodiments, in which like reference numerals represent similar structures throughout the several views of the drawings, and wherein:

FIG. 1 is a schematic diagram illustrating an exemplary vehicle detection system according to some embodiments of the present disclosure;

FIG. 2 is a flowchart illustrating an exemplary process for vehicle detection method according to some embodiments of the present disclosure;

FIG. 3 is a flowchart illustrating an exemplary process for vehicle detection method according to other embodiments of the present disclosure;

FIG. 4 is a flowchart illustrating an exemplary process for vehicle detection method according to other embodiments of the present disclosure;

FIG. 5 is a flowchart illustrating an exemplary process for vehicle detection method according to other embodiments of the present disclosure;

FIG. 6 is a flowchart illustrating an exemplary process for vehicle detection method according to other embodiments of the present disclosure;

FIG. 7 is a flowchart illustrating an exemplary process for vehicle detection according to an embodiment of the present disclosure;

FIG. 8 is a schematic diagram illustrating an exemplary the outgoing snap position according to some embodiments of the present disclosure;

FIG. 9 is a schematic diagram illustrating an exemplary the incoming snap position according to some embodiments of the present disclosure;

FIG. 10 is a schematic diagram illustrating an exemplary the spatial position according to some embodiments of the present disclosure;

FIG. 11 is a schematic flowchart illustrating an exemplary process for enabling a snap line method according to an embodiment of the present disclosure;

FIG. 12 is a flow chart illustrating an exemplary process for the unlicensed vehicle decision logic according to some embodiments of the present disclosure;

FIG. 13 is a structural illustration an exemplary the posture coding sequence according to some embodiments of the present disclosure;

FIG. 14 is a schematic diagram illustrating an exemplary the vehicle posture of the unlicensed target vehicle according to an embodiment of the present disclosure;

FIG. 15 is a schematic structural diagram illustrating an exemplary vehicle detection device according to an embodiment of the present disclosure;

FIG. 16 is a schematic structural diagram illustrating an exemplary computer storage medium according to an embodiment of the present disclosure.

Additional features will be set forth in part in the description which follows, and in part will become apparent to those skilled in the art upon examination of the following and the accompanying drawings or may be learned by production or operation of the examples. The features of the present disclosure may be realized and attained by practice or use of various aspects of the methodologies, instrumentalities, and combinations set forth in the detailed examples discussed below.

## SUMMARY

The present disclosure is further described in terms of exemplary embodiments. These exemplary embodiments are described in detail with reference to the drawings. The drawings are not to scale. These embodiments are non-limiting exemplary embodiments, in which like reference numerals represent similar structures throughout the several views of the drawings, and wherein:

One aspect of embodiments of the present disclosure may provide a method for vehicle detection. The method for vehicle detection may include obtaining a video of a region; determining vehicle information in the video by recognizing a vehicle in the video; and determining a detection result of the vehicle based on the vehicle information.

In some embodiments, the determining vehicle information in the video by recognizing the vehicle in the at least one video frame of the video may include determining at least one recognition result of the vehicle by recognizing the vehicle in at least one video frame, wherein the at least one recognition result of the vehicle may include vehicle information corresponding to the at least one video frame; determining a credibility level associated with the vehicle information of the vehicle based on the at least one recognition result; determining that the credibility level satisfies a preset condition; and determining the vehicle information of the vehicle associated with the credibility level.

In some embodiments, the determining the credibility level associated with the vehicle information of the vehicle based on the at least one recognition result may include: determining the credibility level associated with the vehicle information of the vehicle based on a count of target vehicle information in a plurality of recognition results corresponding to a plurality of video frames.

In some embodiments, The method of claim 1, wherein the detection result indicating whether the vehicle may include a license plate; and the determining the detection result of the vehicle based on the vehicle information may include: determining whether the license plate of the vehicle is available based on the vehicle information; in response to determining that the license plate of the vehicle is unavailable, determining whether to perform a second detection on the license plate of the vehicle from the video; in response to determining to perform the second detection on the license plate of the vehicle from the video, determining a second vehicle information in the video by continuing to recognize the vehicle in the at least one other video frame of the video, and determining the detection result of the vehicle based on the second vehicle information; in response to determining not to perform the second detection, determining the detection result of the vehicle indicating that the vehicle does not have a license plate.

In some embodiments, the determining whether to perform the second detection may include: determining whether the vehicle is in reverse; in response to determining that the vehicle is in reverse, determining to perform the second detection; or in response to determining that the vehicle is not in reverse, determining not to perform the second detection.

In some embodiments, the vehicle information may include vehicle window information, the detection result indicates a reversing state of the vehicle, and the determining the detection result of the vehicle based on the vehicle information further may include: determining a vehicle window position in the region based on the vehicle window information; and determining a reversing state of the vehicle based on the vehicle window position, wherein the reversing state indicates whether the vehicle is in a reverse.

In some embodiments, the vehicle information may include one of vehicle head information and vehicle tail information; and the determining the detection result of the vehicle based on the vehicle information may include: determining a category of at least a portion of the vehicle in the region based on the vehicle information, wherein the category may include one of a vehicle head and a vehicle tail; determining a snap position in the region based on the category, the snap position may include one of a first snap position and a second snap position; determining a positional relationship between a vehicle position and the snap position in the region corresponding to the at least one video frame based on the vehicle information; and determining a video frame corresponding to the positional relationship that meets a preset condition as a snap image of the vehicle.

In some embodiments, the detection result may include a travel direction of the vehicle; and the determining the detection result of the vehicle based on the vehicle information may include: determining position information of the vehicle relative to a reference position in the region based on the vehicle information; and determining the travel direction of the vehicle based on the position information of the vehicle relative to the reference position.

In some embodiments, the vehicle information may include one of license plate information and vehicle face information represented in a frame and vehicle related information represented in the frame; the detection result may include vehicle posture information; and the determining the detection result of the vehicle based on the vehicle information may include: determining a category of at least a portion of the vehicle based on the vehicle related information, wherein the category of at least a portion of the vehicle may include one of a vehicle head and a vehicle tail; determining vehicle orientation information based on at least one of license plate information and vehicle face information; and determining the vehicle posture information based on the category of at least a portion of the vehicle and the vehicle orientation information.

In some embodiments, the determining vehicle orientation information based on at least one of license plate information and vehicle face information may include: determining a vehicle position based on the vehicle related information; determining the vehicle orientation information by at least one of the following two methods: determining a license plate position in the video frame based on the license plate information, and determining the vehicle orientation information based on the license plate position and the vehicle position; and determining a vehicle face position in the video frame based on the vehicle face information, and determining the vehicle orientation information based on the vehicle face position and the vehicle position.

In some embodiments, the determining the vehicle information in the video by recognizing the vehicle in the at least one video frame of the video may include: determining whether the vehicle in the region is within an effective region by recognizing the vehicle in the at least one video frame of the video; and determining the vehicle information for the vehicle in the effective region in the region.

Another aspect of embodiments of the present disclosure may provide a system for vehicle detection. The system for vehicle detection may include: at least one storage medium including a set of instructions; and at least one processor configured to communicate with the at least one storage medium, wherein when executing the set of instructions, the at least one processor may be directed to: obtain a video of a region; determine vehicle information in the video based on recognizing a vehicle in at least one video frame of the video; and determine a detection result of the vehicle of the region based on the vehicle information.

In some embodiments, the determining vehicle information in the video by recognizing the vehicle in the at least one video frame of the video includes: determining at least one recognition result of the vehicle by recognizing the vehicle in at least one video frame, wherein the at least one recognition result of the vehicle including vehicle information corresponding to the at least one video frame; determining a credibility level associated with the vehicle information of the vehicle based on the at least one recognition result; determining that the credibility level satisfies a preset condition; and determining the vehicle information of the vehicle associated with the credibility level.

In some embodiments, the determining the credibility level associated with the vehicle information of the vehicle based on the at least one recognition result includes: determining the credibility level associated with the vehicle information of the vehicle based on a count of target vehicle information in a plurality of recognition results corresponding to a plurality of video frames.

In some embodiments, the detection result indicating whether the vehicle includes a license plate; and the determining the detection result of the vehicle based on the vehicle information includes: determining whether the license plate of the vehicle is available based on the vehicle information; in response to determining that the license plate of the vehicle is unavailable, determining whether to perform a second detection on the license plate of the vehicle from the video; in response to determining to perform the second detection on the license plate of the vehicle from the video, determining second vehicle information in the video by continuing to recognize the vehicle in the at least one other video frame of the video, and determining the detection result of the vehicle based on the second vehicle information; in response to determining not to perform the second detection, determining the detection result of the vehicle indicating that the vehicle does not have a license plate.

In some embodiments, the determining whether to perform the second detection includes: determining whether the vehicle is in reverse, in response to determining that the vehicle is in reverse, determining to perform the second r detection; or in response to determining that the vehicle is not in reverse, determining not to perform the second detection.

In some embodiments, the vehicle information includes vehicle window information, the detection result indicates a reversing state of the vehicle, and the determining the detection result of the vehicle based on the vehicle information further includes: determining a vehicle window position in the region based on the vehicle window information; and determining a reversing state of the vehicle based on the vehicle window position, wherein the reversing state indicates whether the vehicle is in a reverse.

In some embodiments, the vehicle information includes one of vehicle head information and vehicle tail information; and the determining the detection result of the vehicle based on the vehicle information includes: determining a category of at least a portion of the vehicle in the region based on the vehicle information, wherein the category includes one of a vehicle head and a vehicle tail; determining a snap position in the region based on the category, the snap position may include one of a first snap position and a second snap position; determining a positional relationship between a vehicle position and the snap position in the region corresponding to the at least one video frame based on the vehicle information; and determining a video frame corresponding to the positional relationship that meets a preset condition as a snap image of the vehicle.

In some embodiments, the detection result includes a travel direction of the vehicle; and the determining the detection result of the vehicle based on the vehicle information includes: determining position information of the vehicle relative to a reference position in the region based on the vehicle information; and determining the travel direction of the vehicle based on the position information of the vehicle relative to the reference position.

In some embodiments, the vehicle information includes one of license plate information and vehicle face information represented in a frame and vehicle related information represented in the frame; the detection result includes vehicle posture information; and the determining the detection result of the vehicle based on the vehicle information includes: determining a category of at least a portion of the vehicle based on the vehicle related information, wherein the category of at least a portion of the vehicle includes one of a vehicle head and a vehicle tail; determining vehicle orientation information based on at least one of license plate information and vehicle face information; and determining the vehicle posture information based on the category of at least a portion of the vehicle and the vehicle orientation information.

In some embodiments, the determining vehicle orientation information based on at least one of license plate information and vehicle face information includes: determining a vehicle position based on the vehicle related information; determining the vehicle orientation information by at least one of the following two methods: determining a license plate position in the video frame based on the license plate information, and determining the vehicle orientation information based on the license plate position and the vehicle position; and determining a vehicle face position in the video frame based on the vehicle face information, and determining the vehicle orientation information based on the vehicle face position and the vehicle position.

In some embodiments, the determining the vehicle information in the video by recognizing the vehicle in the at least one video frame of the video includes: determining whether the vehicle in the region is within an effective region by recognizing the vehicle in the at least one video frame of the video; and determining the vehicle information for the vehicle in the effective region in the region.

Another aspect of embodiments of the present disclosure may provide a non-transitory computer-high-level readable medium including executable instructions. When executed by at least one processor, the executable instructions may direct the at least one processor to perform a method. The method may include: obtaining a video of a region; determining vehicle information in the video by recognizing a vehicle in the video; and determining a detection result of the vehicle based on the vehicle information.

## DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well-known methods, procedures, systems, components, and/or circuitry have been described at a relatively high level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the spirit and scope of the present disclosure. Thus, the present disclosure is not limited to the embodiments shown, but to be accorded the widest scope consistent with the claims.

The terminology used herein is to describe particular example embodiments only and is not intended to be limiting. As used herein, the singular forms "a," "an," and "the" may be intended to include the plural forms as well, unless the context indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that the term "system," "engine," "unit," "module," and/or "block" used herein are one method to distinguish different components, elements, parts, sections or assembly of different levels in ascending order. However, the terms may be displaced by another expression if they achieve the same purpose.

The flowcharts used in the present disclosure illustrate operations that systems implement according to some embodiments of the present disclosure. It is to be expressly understood the operations of the flowcharts may be implemented not in order. Conversely, the operations may be implemented in an inverted order, or simultaneously. Moreover, one or more other operations may be added to the flowcharts. One or more operations may be removed from the flowcharts.

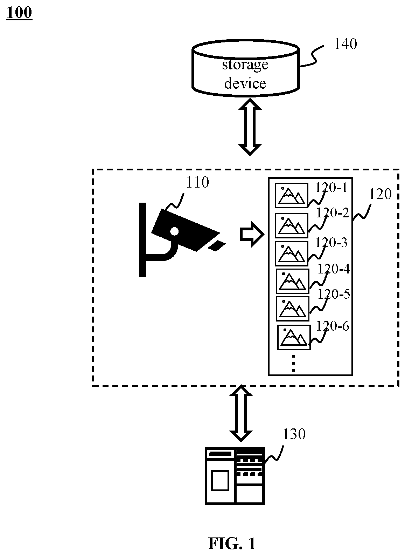

FIG. 1 is a schematic diagram illustrating an exemplary vehicle detection system according to some embodiments of the present disclosure.

As shown in FIG. 1, the vehicle detection system 100 may include a camera 110, a processing device 130, and a storage device 140.

The camera 110 may be any electronic device capable of capturing an image and/or a video. For example, the camera 110 may include an image sensor, a video recorder, etc., or any combination thereof. In some embodiments, the camera 110 may include any suitable type of camera, for example, a fixed camera, a fixed dome camera, etc., or any combination thereof.

In some embodiments, the camera 110 may obtain a video 120 of a region (also referred to as a detection region or a field of view range of the camera 110). The video 120 may contain multiple video frames, such as video frames 120-1, 120-2, 120-3, 120-4, 120-5,120-6, etc. In some embodiments, the video frames in the video 120 may include a preset position. For example, various lines, points, regions, etc. In some embodiments, the video frames in the video 120 may include various objects in the regions, such as an incoming vehicle, an outgoing vehicle, a reversing vehicle, etc.

The processing device 130 may process data and/or information obtained from the camera 110 and/or the storage device 140. In some embodiments, the processing device 130 may obtain the video 120 from the camera 110 via a network and process an image (also referred to as a video frame) in the video 120 to determine vehicle information in the video by recognizing a vehicle in the video. The processing device 120 may further determine a detection result of the vehicle based on the vehicle information. For example, the processing device 130 may determine a recognition result of the vehicle by recognizing the vehicle in at least one video frame, determine a credibility level associated with the vehicle information of the vehicle based on the recognition result, determine that the credibility level satisfies the preset condition, and determine the vehicle information of the vehicle associated with the credibility level. As another example, the processing device 130 may determine the vehicle information in a video frame 120-5 based on recognizing the vehicle in the video frame 120-5 of the video 120, and determine a license plate character detection result of the vehicle based on the vehicle information. As yet another example, the processing device 130 may determine window information by recognizing the vehicle in the video 120, determine a vehicle window position in the region based on the vehicle window information, and determine a reversing state of the vehicle based on the vehicle window position. As yet another example, the processing device 130 may determine one of vehicle head information and vehicle tail information in the video 120, determine a vehicle category of the vehicle in the region based on the vehicle information, determine a snap position in the region based on the vehicle category, the snap position include one of a first snap position and a second snap position, determine a positional relationship between a vehicle position and the snap position in the region corresponding to at least one video frame based on the vehicle information, and determine the video frame corresponding to the positional relationship that meets a preset condition as a snap image of the vehicle. The processing device 130 may further transmit the snap image to the storage device 140 for storage via the network. As yet another example, determine license plate information and vehicle face information of the video frame, and vehicle related information of the video frame based on recognizing the vehicle in the video frame 120-5 of the video 120, and determine vehicle posture information in the region based on the vehicle information. As yet another information, the processing device 130 may determine whether the vehicle in the region is within an effective region based on recognizing the vehicle in the at least one video frame of the video and determine the vehicle information for the vehicle in the effective region of the region.

In some embodiments, the processing device 130 may include a central processing unit (CPU), a digital signal processor (DSP), etc., and/or any combination thereof. In some embodiments, the processing device 130 may be local, remote, or implemented on a cloud platform. In some embodiments, the processing device 130 or a part of the processing device 130 may be integrated into the camera 110.

The storage device 140 may store data, instructions, and/or any other information. In some embodiments, the storage device 140 may store data obtained from the camera 110 and/or the processing device 130 through a network. In some embodiments, the storage device 140 may obtain and store image frames to be saved from the processing device 130 through a network. For example, the storage device 140 may obtain and store video frames 120-4, 120-5, and 120-6 from the processing device 130.

In some embodiments, the vehicle detection system 100 (e.g., the processing device 130) may include an acquisition module, a recognition module, and a detection module.

The acquisition module may be configured to obtain the video of the region.

The recognition module may be configured to determine the vehicle information in the video by recognizing the vehicle in the video. In some embodiments, the recognizing module may be further configured to obtain a recognition result of the vehicle by recognizing the vehicle in at least one video frame may determine a credibility level associated with the vehicle information of the vehicle based on at least one recognition result; determine that the credibility level satisfies the preset condition; and determining the vehicle information of the vehicle associated with the credibility level. In some embodiments, the at least one recognition result of the vehicle may include vehicle information corresponding to the at least one video frame. In some embodiments, the at least one recognition result of the vehicle may include vehicle information corresponding to a plurality of video frames. In some embodiments, the video frame recognizing module may be further configured to determine the credibility level associated with the vehicle information of the vehicle based on a count of target vehicle information in a plurality of vehicle information corresponding to the plurality of video frames.

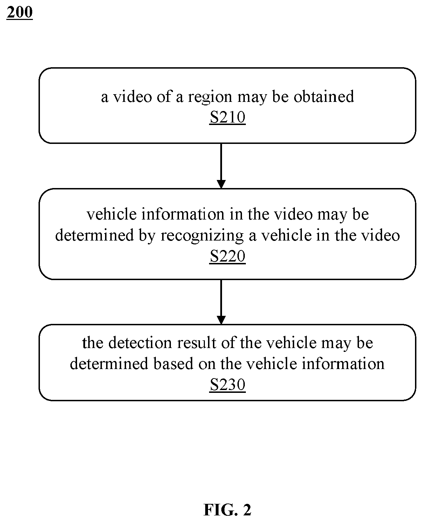

The detection module may be configured to determine a detection result of the vehicle based on the vehicle information. In some embodiments, the detection result of the vehicle may include the license plate character of the vehicle, whether the vehicle has a license plate, a reversing state of the vehicle (for example, the vehicle is in reverse and the vehicle is not in reverse), a snap image of the vehicle, a travel direction of the vehicle, vehicle posture information, etc. More descriptions for determining various detection results of the vehicle, please refer to FIGs. 2-14 and related descriptions.

It should be noted that the above description is merely provided for the purposes of illustration, and not intended to limit the scope of the present disclosure. For persons having ordinary skills in the art, multiple variations and modifications may be made under the teachings of the present disclosure. In some embodiments, the video frame recognizing module, and the vehicle detecting module disclosed in FIG. 1 may be different modules in one system, or one module may implement the functions of two or more modules mentioned above. For example, each module may share a storage module, and each module may also have its storage module. However, those variations and modifications do not depart from the scope of the present disclosure.

FIG. 2 is a flowchart illustrating an exemplary process for vehicle detection according to some embodiments of the present disclosure. As shown in FIG. 2, process 200 may include the following operations. In some embodiments, process 200 may be performed by a processing device (e.g., a processing device 130).

In 210, a video of a region may be obtained. In some embodiments, operation 210 may be performed by the processing device 130 (e.g., acquisition module).

The region may be a physical area at, for example, police checkpoints, parking lots, road entrances, etc. The video may include the plurality of video frames, which are also referred to as images of the region. In some embodiments, the plurality of video frames may be obtained by performing a framing operation on the video.

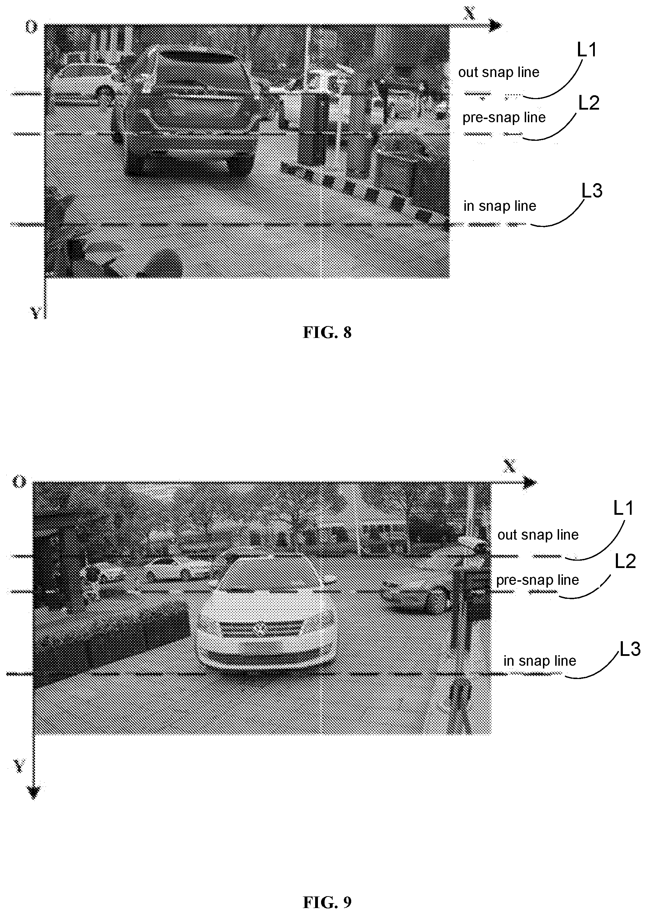

In some embodiments, the vehicle in various travel directions may appear in the region. For example, the vehicle may drive into the region, drive out of the region, etc. The vehicle driving into or enter the region may also be referred to be an incoming vehicle; the vehicle driving out of or exit the region may also be referred to be an outgoing vehicle. As another example, the vehicle may be reversing in the region. The vehicle is reversing in the region may also be referred to as a reversing vehicle. The travel direction of the vehicle driving into or entering the region may be the incoming direction and the travel direction of the vehicle driving out of or exiting the region may be the outgoing direction. The travel direction (such as incoming direction, outgoing direction) may be relative to the location of the camera 110. For example, as shown in FIG.8 and FIG.9, the region in the video is a gateway to a parking lot. The travel direction of the vehicle gradually approaching the location of the camera 110 may be the incoming direction, the travel direction of the vehicle gradually moving away from the location of the camera 110 may be the outgoing direction.

In 220, vehicle information in the video may be determined by recognizing a vehicle in the video. In some embodiments, operation 220 may be performed by the processing device 130 (e.g., recognition module).

In some embodiments, the processing device 130 may obtain a recognition result corresponding to a video frame in the video by recognizing the vehicle from the video frame of the video. As used herein, the recognition result of the vehicle may also be referred to as a preliminary detection result of the vehicle. The recognition result may include the vehicle information of the video frame. As used herein, the recognition of the vehicle from the video frame may include determine the position of the vehicle from the video frame and determine the vehicle information of the vehicle represented in the video frame.

In some embodiments, the vehicle of the video may be tracked and recognizing through recognizing the vehicle in the plurality of video frames.

In some embodiments, the vehicle recognition may be performed on the video frames through various image recognition techniques, e.g., a vehicle detection algorithm, a vehicle recognition model, etc. The vehicle recognition model may be a neural network model, e.g., a deep learning model (such as a CNN, a YOLO model, etc.), or other machine learning models, etc.

In some embodiments, the recognition of the vehicle may include recognizing different portions of the vehicle. The different portions of the vehicle may include vehicle head, vehicle tail, vehicle light (such as the taillight of the vehicle), the license plate of the vehicle, the vehicle window (such as the front windows of the vehicle, also referred to as front windshield window), the vehicle face (also referred to as the front face of the vehicle), etc. The different portions of the vehicle may also be referred to as targets of the vehicle. The targets of the vehicle may include at least a portion of the vehicle. In some embodiments, the various targets (such as the vehicle, the vehicle head, the vehicle tail, the vehicle light, the license plate of the vehicle, the vehicle window, the vehicle face, etc.) related to the vehicle in the video frame may be recognized through the deep learning model (such as a YOLO model).

In some embodiments, different vehicle recognition models may correspond to different types of weather, and the processing device 130 may select the corresponding vehicle recognition model according to the type of weather in the current region. In some embodiments, the types of weather may include rain, snow, day, and night. In some embodiments, the vehicle recognition model corresponding to the various types of weather may be trained and obtained based on a training set including multiple image samples that are acquired under various types of weather and labels corresponding to the image samples. The labels may include sample vehicle information determined from each of the image samples.

In some embodiments, the vehicle information may include characteristic information of the vehicle as a whole (such as the vehicle) and different portions of the vehicle (e.g., the vehicle head, the vehicle tail, the vehicle light, the license plate of the vehicle, the vehicle window, the vehicle face, etc.) For example, the vehicle information may include globle characteristic information of the vehicle, such as the color of the vehicle, the size (e.g., the length, the width, the height) of the vehicle, the position of the vehicle, the outline of the vehicle, etc. The vehicle information may include local characteristic information of a portion of the vehicle (e.g., the license plate of the vehicle, the vehicle light, the vehicle window, the vehicle face, etc.) The local characteristic information of a portion of the vehicle (e.g., the license plate of the vehicle, the vehicle light, the vehicle window, the vehicle face, the vehicle head, the vehicle tail, etc.) may include a position of the portion of the vehicle, the size of the portion of the vehicle, the color of the portion of the vehicle, the outline of the portion of the vehicle, etc. In some embodiments, the local characteristic information of a portion of the vehicle may also be referred to as the target vehicle information (e.g., vehicle head information, vehicle tail information, vehicle light information, vehicle license plate information, vehicle window information, vehicle face information, etc).

In some embodiments, the vehicle may not be represented in the video as a whole, and the video may include the vehicle head or the vehicle tail of the vehicle.

In some embodiments, the outline of the vehicle as a whole and each vehicle portion may be represented by a detection box (also referred to as a bounding box).

In some embodiments, the video frame may include more than one vehicle.

In some embodiments, when the video frame includes more than one vehicle, the processing device 130 may recognize more than one vehicle respectively, and obtain the vehicle information of each vehicle. In some embodiments, when the video frame includes more than one vehicle, the processing device 130 may recognize a designated vehicle or a target vehicle, and obtain the vehicle information of the designated vehicle or the target vehicle. It can be understood that the various vehicle parts belonging to the same vehicle should be in the same vehicle outline.

In some embodiments, the credibility level associated with the vehicle information of the vehicle (e.g., the credibility level associated with the vehicle head information, the credibility level associated with the vehicle tail information, the credibility level associated with the vehicle light information, the credibility level associated with the vehicle license plate information, the credibility level associated with the vehicle window information, the credibility level associated with the vehicle face information, etc.) may be determined based on at least one recognition result corresponding to the at least one video frame. The at least one recognition result may include the vehicle information corresponding to at least one video frame. The credibility level may reflect whether the vehicle information is credible. For example, the credibility level may reflect a difference or error between the vehicle information estimated from the video frame and actual vehicle information. The greater the credibility level is, the smaller the difference or error between the vehicle information estimated from the video frame and actual vehicle information may be. The credibility level may be expressed by characters, numerical values (e.g., 0 means incredible, 1 means credible, and for example, if the reliability is greater than a threshold, it means credible), etc.

In some embodiments, the credibility level associated with the vehicle information of the vehicle may be determined based on the vehicle recognition model (e.g., the neural network model such as CNN and YOLO model). In some embodiments, a video frame may be inputted into the vehicle recognition model, and the vehicle recognition model may output the recognition result of the vehicle corresponds to the video frame. The recognition result of the vehicle may include the vehicle information and the credibility level associated with the vehicle information of the vehicle.

In some embodiments, the vehicle recognition may be performed on the plurality of the video frames (for example, consecutive N frames of the video or N frames of the video with a few frame intervals, N is an integer greater than 2), and obtain a plurality of recognition results corresponding to the plurality of the video frames. The plurality of recognition results of the vehicle may include the vehicle information corresponding to the plurality of video frames. The credibility level associated with the vehicle information of the vehicle may be determined based on the vehicle information corresponding to the plurality of the video frames.

In some embodiments, the processing device 130 may obtain multiple candidate credibility levels associated with the vehicle information of the vehicle based on the plurality of the video frames, and determine the credibility level associated with the vehicle information of the vehicle based on the multiple candidate credibility levels. For example, the credibility level associated with the vehicle information of the vehicle may be determined as the average or sum of the multiple candidate credibility levels associated with the vehicle information of the vehicle corresponding to the plurality of video frames.

In some embodiments, the credibility level associated with the vehicle information include the credibility level associated with the target vehicle information (e.g., the credibility level associated with the vehicle head information, the credibility level associated with the vehicle tail information, the credibility level associated with the vehicle light information, the credibility level associated with the vehicle license plate information, the credibility level associated with the vehicle window information, the credibility level associated with the vehicle face information, etc.). The credibility level associated with the target vehicle information may be determined based on the count of the target vehicle information (such as vehicle information, vehicle head information, vehicle tail information, vehicle light information, vehicle license plate information, vehicle window information, vehicle face information, etc.) in the plurality of recognition results corresponding to the plurality of video frames (such as N frames). The count of the target vehicle information may refer to the number of video frames in which target vehicle information is identified among multiple video frames.

In some embodiments, the larger the count of the target vehicle information, the higher the credibility level associated with the target vehicle information. In some embodiments, if the count of target vehicle information is greater than the threshold (such as N/2), the credibility level associated with the target vehicle information denotes 1, otherwise, the credibility level associated with the target vehicle information denotes 0. For example, if the count of the video frames in which the vehicle tail information is identified is greater than the threshold through recognizing the vehicle in the plurality of video frames and the count of the vehicle tail information is greater than the threshold, the processing device 130 may determine that the credibility level associated with the vehicle tail information is 1. In some embodiments, the threshold may be associated with the light intensity of the environment. For example, the weaker the light intensity is, the bigger the threshold may be.

In some embodiments, the value of N may be associated with the speed of the vehicle. For example, the faster the speed of the vehicle, the bigger the value of N.

In some embodiments, the speed of the vehicle may be determined based on the vehicle displacement of the vehicle in two or more video frames (e.g., the displacement vector of the vehicle). For example, the difference between two vehicle displacements of the vehicle corresponding to two video frames is D, then the vehicle speed may be determined based on D and the time difference between the two video frames.

In some embodiments, the plurality of the target vehicle information corresponding to the plurality of video frames may be represented by the queue information of each target (e.g., the queue of the vehicle light information).

In some embodiments, the credibility level associated with the target vehicle information may be represented by the category flag label ID.

In some embodiments, the vehicle information of the vehicle (e.g., vehicle head information, vehicle tail information, vehicle light information, vehicle license plate information, vehicle window information, vehicle face information, etc.) corresponding to the at least one video frame that the credibility level satisfies the preset condition may be determined. For example, if the credibility level of the vehicle head information satisfies the preset condition (e.g., the credibility level of the vehicle head information is greater than threshold or 1), and the vehicle head information corresponding to the at least one video frame may be determined. As another example, the credibility level of the vehicle tail information does not satisfy a preset condition, the vehicle tail information corresponding to the at least one video frame is not determined.

The credibility level associated with the vehicle information of the vehicle satisfies the preset condition may reflect the vehicle information of the vehicle is credible and the credibility level associated with the vehicle information of the vehicle does not satisfy a preset condition may reflect the vehicle information of the vehicle is incredible. It can filter the incredible vehicle information of the vehicle and make sure the stability of the determined vehicle information by determining the vehicle information of the vehicle corresponding to the at least one video frame that the credibility level satisfies the preset condition.

In some embodiments, whether the vehicle is in an effective region in the region may be determined based on the recognition result (e.g., vehicle outline in the recognition result) of the video frames. The effective region may be a defined detection region (e.g., a detection region in the middle of the region). The effective region may be the region of various shapes in the video, such as a closed polygon.

In some embodiments, whether the vehicle outline, the points in the vehicle outline, and the points on the vehicle outline are in the effective region may be determined. If the vehicle outline, the points in the vehicle outline, and the points on the vehicle outline are in the effective region, the processing device 130 may determine that the vehicle is in the effective region in the region; if the vehicle outline, the points in the vehicle outline, and the points on the vehicle outline are not in the effective region, the processing device 130 may determine that the vehicle is not in the effective region in the region.

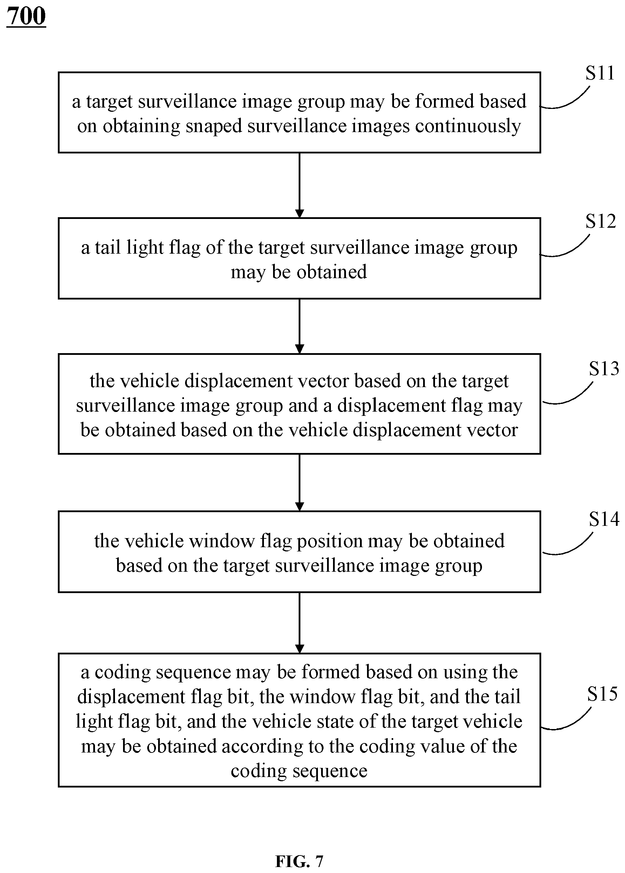

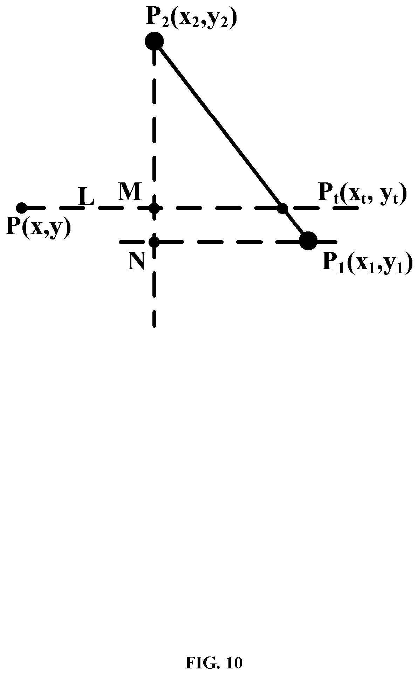

More descriptions of determining whether the vehicle is in the effective region may be found elsewhere in the present disclosure (e.g., FIGs. 7 and 10 and their related descriptions thereof). To determine whether a point in the vehicle outline or a point on the vehicle outline is in the effective region, a manner similar to the directional shooting technique may be used. The detection region in the directional shooting method is the effective region. Using the directional shooting technique, the center point of the lower boundary of the vehicle box may be replaced with the point in the vehicle outline or the point on the vehicle outline.

In some embodiments, it may be determined for a plurality of points (for example, the plurality of points on the vehicle outline or the plurality of points in the vehicle outline) whether the points fall within the effective region. If the count of points falling in the effective region exceeds the threshold, it may be determined that the vehicle is in the effective region. The threshold may be set according to actual needs or experience. In some embodiments, the threshold is related to the size of the vehicle, the larger the vehicle, the larger the threshold. The size of the vehicle may refer to the size of the area surrounded by the outline of the vehicle.

In some embodiments, only the vehicle information of the vehicle in the effective region may be determined. A vehicle in the effective region may also be referred to as an effective target or a target vehicle. Through this embodiment, only the vehicles in the effective region may be detected and the detection result of the vehicles in the effective region may be determined, avoiding interference from other vehicles.

By judging whether a point in the vehicle outline or a point on the vehicle outline is in the effective region, the vehicle in the effective region may be accurately and effectively selected, and the vehicle that does not need to be detected (can also be referred to as invalid vehicle) may be filtered out. In turn, the time complexity of the algorithm may be reduced, and the problem of detecting more invalid targets may be optimized.

In 230, the detection result of the vehicle may be determined based on the vehicle information. In some embodiments, operation 230 may be performed by the processing device 130 (e.g., detection module).

In some embodiments, the detection result of the vehicle may include a detection result of the license plate of the vehicle, the reversing state of the vehicle (for example, the vehicle is in reverse or not), the snap image of the vehicle, the travel direction of the vehicle, the vehicle posture information, etc. A detection result of the license plate of the vehicle may indicate whether the vehicle has a license plate and/or information for the license plate (e.g., information of license plate character) if the vehicle has a license plate.

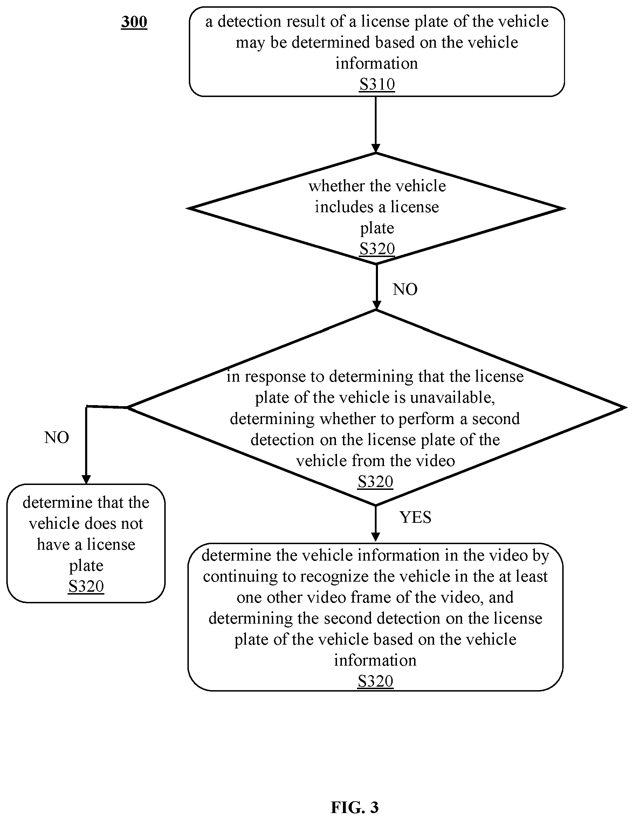

More descriptions of determining the detection result of the vehicle may be found elsewhere in the present disclosure (e.g., FIGs. 3 to 14 and their related descriptions thereof).

FIG. 3 is a flowchart illustrating an exemplary process for vehicle detection according to other embodiments of the present disclosure. As described in FIG. 3, process 300 include the following operations. In some embodiments, process 300 may be executed by the processing device 130.

In 310, a detection result of a license plate of the vehicle may be determined based on the vehicle information. In some embodiments, operation 310 may be performed by the processing device 130 (e.g., detection module). The vehicle information may be determined as described in connection with operation 220 in FIG. 2.

In some embodiments, the license plate may be recognized through various recognition techniques of the license plate based on the vehicle license plate information (e.g., a vehicle license plate image corresponding to the license plate outline in the video frame), and obtain the detection result of the license plate of the vehicle. For example, the detection result of the license plate of the vehicle may include, e.g., license plate number. As another example, the license plate may be recognized by the processing device 130 using a detection algorithm, a recognition model, etc., for license plate recognition. The recognition model for license plate recognition may be a neural network model (such as CNN), or other machine learning models, etc.

In some embodiments, the detection result of the license plate of the vehicle may indicate whether the vehicle includes a license plate.

In some embodiments, different recognition models for license plate recognition may be corresponding to different types of weather, and the processing device 130 may select the corresponding recognition model for license plate recognition according to the types of weather of the current region. In some embodiments, the recognition model for license plate recognition corresponding to the image samples under various types of weather may be trained and obtained based on the image samples including license plate images and labels (i.e., license plate character results). Through this embodiment, a more accurate detection result of the license plate may be obtained.

In some embodiments, the processing device 130 may obtain the detection result of the license plate of the vehicle of a video frame (such as a snap image), as the detection result of the license plate of the vehicle.

In some embodiments, the processing device 130 may obtain multiple candidate detection results based on the plurality of the video frames, and determine the detection result of the license plate of the vehicle based on the multiple candidate detection results. For example, the processing device 130 may designate a candidate detection result of the license plate with the highest confidence level among the multiple candidate detection results of the license plate as the detection result of the license plate of the vehicle. The confidence level corresponding to each of the multiple candidate detection results of the license plate may be determined based on the credibility level associated with the vehicle information corresponding to the video frame. Determining the detection result of the license plate of the vehicle based on the multiple candidate detection results may ensure the validity and accuracy of the detection result of the license plate of the vehicle.

In 320, in response to determining that the license plate of the vehicle is unavailable, whether to perform a second detection on the license plate of the vehicle from the video may be determined. In some embodiments, operation 320 may be performed by the processing device 130 (e.g., detection module). In some embodiments, due to the influential factors such as the vehicle does not have the license plate, excessively fast vehicle speed, low environmental visibility, etc., the processing device 130 may do not recognize the license plate based on the vehicle information, that is, the detection result of the license plate of the vehicle indicates the vehicle does not have the license plate.

In some embodiments, whether to perform the second detection on the license plate of the vehicle may be determined based on determining whether the vehicle is in reverse. If the vehicle is in reverse, the license plate may be captured by the camera130 again, determine to perform the second detection on the license plate of the vehicle from the video. If the vehicle is not in reverse, determine not to perform the second detection on the license plate of the vehicle from the video.

In some embodiments, a reversing state of the vehicle (such as an incoming vehicle) may be determined based on the vehicle window information (e.g., the front window information). The reversing state of the vehicle may indicate the vehicle is in reverse, the vehicle is not in reverse, or whether the reversing vehicle is returning to a preset region. The preset region may refer to the license plate detection region (for example, the region divided by the snap position as shown in FIGs. 8 and 9), which may be set according to requirements.

In some embodiments, after the incoming vehicle drives into the region, the vehicle head has passed the license plate detection region (for example, the region divided by the snap position), but the detection result of the vehicle license plate is not obtained. In this case, the vehicle may choose to reverse. If the vehicle is in reverse, the vehicle may remain in the region, and the front window of the vehicle may always appear in the subsequent video frames. When the vehicle is in reverse, the direction of movement of the vehicle may also be opposite to the direction of travel. If the vehicle is not in reverse, the vehicle may continue to drive away from the region, and the front window of the vehicle may disappear in the subsequent video frames. Therefore, if the window of the vehicle (e.g., the front window of the vehicle) is identified in the subsequent video frames, the vehicle may be in reverse, and if the window of the vehicle is not identified in the subsequent video frames, the vehicle may be not in reverse. Through identifying the vehicle window and distinguishing the direction of movement of the vehicle, the reversing state of the vehicle may be effectively and accurately recognized.

In some embodiments, if the window information of the vehicle is determined, the window of the vehicle may be determined to be identified.

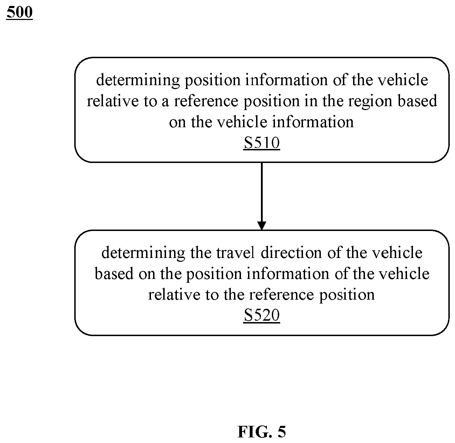

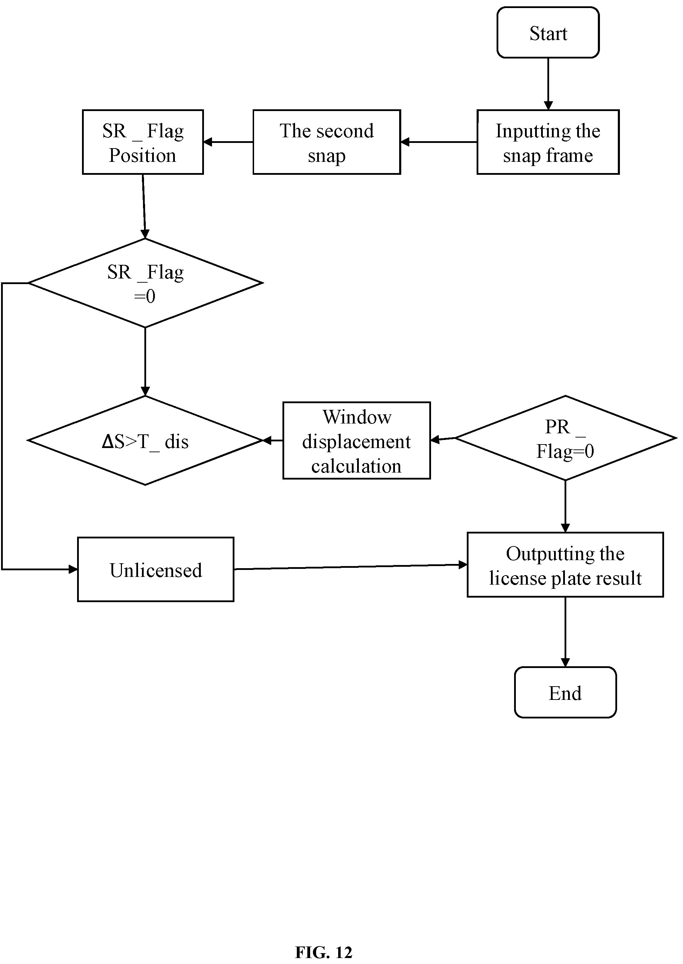

In some embodiments, the rule line (e.g., the pre-snap line) may be set in the video frame, a vehicle displacement vector from the vehicle to the rule line may be determined, and the movement direction of the vehicle may be determined based on the vehicle displacement vector. In some embodiments, for a vehicle whose travel direction is the incoming direction, whether the vehicle is in reverse may be further determined based on the window information and the vehicle displacement vector. More descriptions for the vehicle displacement vector, determining the travel direction of the vehicle, and determining whether the vehicle is in reverse, please refer to FIGs 5 and 12 and their related descriptions.

In some embodiments, the vehicle window position in the region may be determined based on the vehicle window information and whether the moving direction of the incoming vehicle is opposite to the travel direction may be determined based on the vehicle window position (for example, the vehicle window position corresponding to the plurality of the video frames). If the moving direction of the incoming vehicle is opposite to the travel direction, the vehicle is in reverse. and if the moving direction of the incoming vehicle is the same as the travel direction, the vehicle is not in reverse.

In some embodiments, the processing device 130 may further determine whether the reversing vehicle goes back in the preset region. If the reversing vehicle reverses to the preset region, the processing device 130 may be determined to perform the second detection on the license plate of the vehicle from the video.

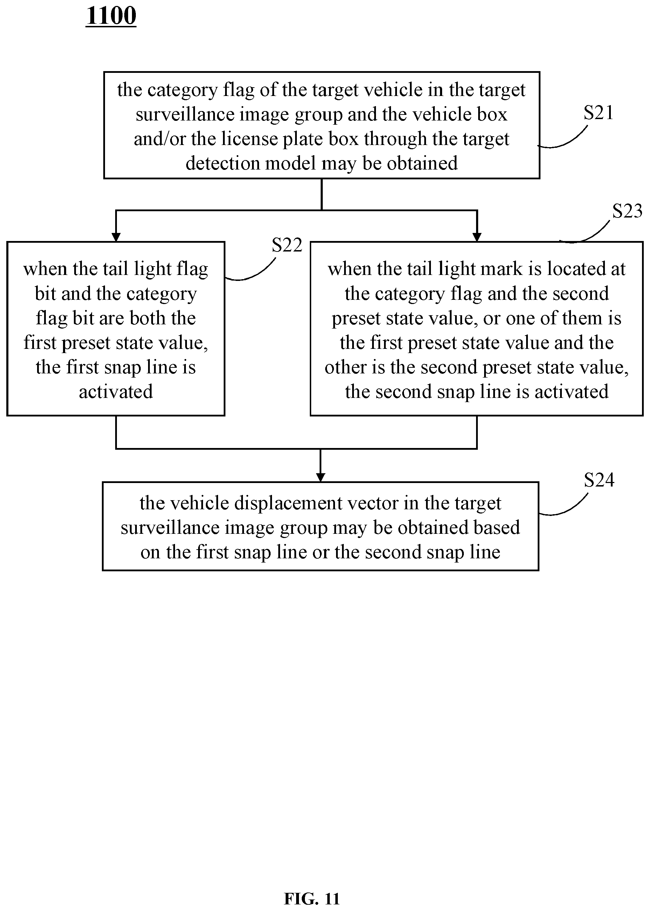

In some embodiments, after determining that the vehicle is in reverse, the processing device130 may determine whether the reversing vehicle reverses to the preset region based on whether the window position (for example, a reverse displacement of the window) meets the conditions (for example, whether the window position is within the preset region, or whether the reverse displacement of the window is within the preset range). More descriptions for the reverse displacement of the window, please refer to FIG. 11 and its related descriptions. When the vehicle reverses to the preset region, the license plate may be included in the video frame again.

In some embodiments, when the vehicle reverses to the preset region, the vehicle may be snaped according to the way of vehicle snap to obtain the snap image of the vehicle (also referred to as a second snap image).

In 320, if the processing device 130 determines to perform the second detection on the license plate of the vehicle, the processing device 130 may determine the vehicle information in the video by continuing to recognize the vehicle in the at least one other video frame of the video, and determine the second detection on the license plate of the vehicle based on the vehicle information; if the processing device 130 determines not to perform the second detection on the license plate of the vehicle, the processing device 130 may determine that the vehicle does not have the license plate.

In some embodiments, the processing device 130 may be continuing to recognize the vehicle in another one or more video frames.

Through determining whether the vehicle is in reverse, and if the vehicle is in reverse, the processing device 130 may perform the second detection, which can effectively reduce the possibility of misjudgment of the vehicle does not have the license plate.

It should be noted that the above-mentioned description of process 300 is for illustrative purposes only, and is not intended to limit the scope of the present disclosure. For those skilled in the art, without deviating from the principles of the present disclosure, various variations and modifications of the forms and the details of the above methods and systems may be made. However, these variations and modifications are also within the scope of the present disclosure. In some embodiments, one or more operations of process 300 may be omitted, and/or one or more additional operations may be added to process 300. For example, a storing operation may be added to process 300. In the storing operation, a processing device 130 may store information and/or data related to the system for video processing (e.g., the candidate bounding box) in the storage device (e.g., a storage device 140).

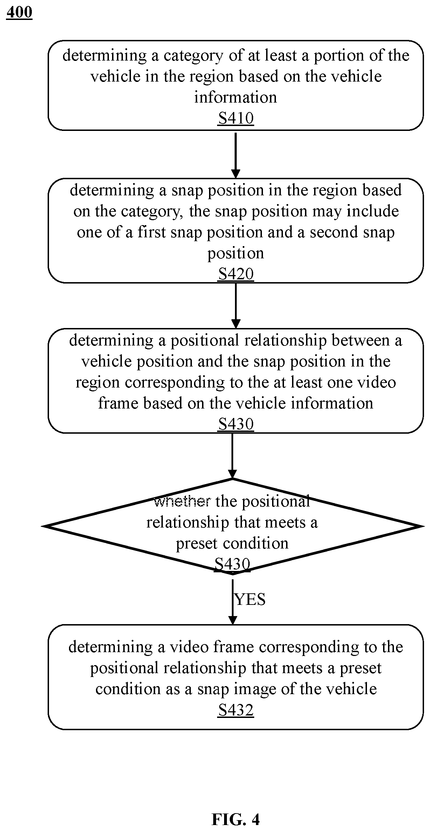

FIG. 4 is a flowchart illustrating an exemplary process for vehicle detection according to other embodiments of the present disclosure. As shown in FIG. 4, process 400 may include the following operations. In some embodiments, process 400 may be executed by the processing device 130.

In 410, a category of at least a portion of the vehicle in a region may be determined based on vehicle information.

In some embodiments, operation 410 may be performed by the processing device 130 (e.g., detection module). The region may be determined as described in connection with operation 210 in FIG. 2. The vehicle information may be determined as described in connection with operation 210 in FIG. 2.

In some embodiments, the category may include one of the vehicle head and the vehicle tail.

In some embodiments, if the processing device 130 determines that the vehicle information includes the vehicle head information, the category of at least a portion of the vehicle may be determined to be the vehicle head.

In some embodiments, if the processing device 130 determines that the vehicle information includes the vehicle tail information, the category of at least a portion of the vehicle may be determined to be the vehicle tail.

In 420, a snap position in the region may be determined based on the category. The snap position may include one of a first snap position and a second snap position. In some embodiments, operation 420 may be performed by the processing device 130 (e.g., detection module).

In some embodiments, the first snap position and the second snap position may be an incoming snap position and an outgoing snap position, respectively.

In some embodiments, if the category of at least a portion of the vehicle is the vehicle tail, the outgoing snap position in the region (i.e., the second snap position, the exiting snap position) may be determined as the corresponding snap position of the vehicle. If the category of at least a portion of the vehicle is the vehicle head, the incoming snap position in the region (i.e., the first snap position, the entering snap position) may be determined as the corresponding snap position of the vehicle. The snap position may be expressed as a snap line (which may be a horizontal line or an inclined line), a snap point, or a snap region.

In some embodiments, the outgoing snap position may be set in an area above the middle line of the video frame, and the incoming snap position may be set in an area below the middle line of the video frame. For example, as shown in FIG. 8 and FIG. 9, the out snap line L1 denotes the outgoing snap position, and the in snap line L3 denotes the incoming snap position.

In 430, a position relationship between a vehicle position and the snap position in the region corresponding to the at least one video frame may be determined based on the vehicle information, and the video frame may be obtained when the position relationship satisfies the preset condition and the video frame may be determined as a snap image of the vehicle. In some embodiments, operation 430 may be performed by the processing device 130 (e.g., detection module).

The snap position may be a position where the vehicle is snapped by the camera 110 to obtain the video frame of the vehicle. The video frame of the vehicle may be designated as the snap image.

In some embodiments, the vehicle position may be determined based on the vehicle information. For example, the position of the lower boundary of the vehicle outline or a point on the lower boundary of the vehicle outline may be determined as the vehicle position.

In some embodiments, the preset condition may be satisfied that the vehicle position in the video frame is close to the snap position and the distance from the snap position to the vehicle position is less than a threshold.

Through this embodiment, the snap image may be automatically obtained according to the position relationship, and the vehicle may be included in the snap image, which is convenient to save the snap image as a clear and complete vehicle image.

Based on recognizing whether the at least a portion of the vehicle in the video frame is the vehicle head or the vehicle tail, the snap position (e.g., the incoming snap position to the outgoing snap position) may be determined automatically. Based on the position relationship between the vehicle position and the snap position, the vehicle can be snaped accurately, effectively, and automatically.

Fig. 5 is a flowchart illustrating an exemplary process for vehicle detection according to other embodiments of the present disclosure. As shown in FIG. 5, process 500 may include the following operations. In some embodiments, process 500 may be executed by the processing device 130.

In 510, position information of the vehicle relative to a reference position in a region in the video may be determined based on vehicle information. In some embodiments, operation 510 may be performed by the processing device 130 (e.g., detection module). The region may be determined as described in connection with operation 210 in FIG. 2. The vehicle information may be determined as described in connection with operation 210 in FIG. 2.

In some embodiments, the reference position may be set in a middle region of the video frame (that is, the middle region of the region). The reference position may be a pre-snap position (e.g., the pre-snap line L2 as shown in FIGs. 8 and 9).

In some embodiments, the position information of the vehicle relative to the reference position may include a displacement vector (also referred to as the vehicle displacement vector) from the position of the vehicle in the video frame (e.g., the position of the center point of the vehicle, the position of the lower boundary of the vehicle outline, or the position of the point on the lower boundary of the vehicle outline, etc.) to the reference position, or may include the displacement vector from the reference position to the position of the vehicle. The direction of the displacement vector may indicate the travel direction of the vehicle in the region.

For example, as shown in FIG.8 and FIG.9, when the vehicle enters the region in the incoming direction, with the position of the vehicle as to the starting position, the displacement vector from the position of the vehicle to the starting snap line (denoting the starting position) is greater than 0. When the vehicle enters the region in the outgoing direction, with the position of the vehicle as to the starting position, the displacement vector from the position of the vehicle to the starting snap line (denoting the starting position) is less than 0.

In some embodiments, the direction of the displacement vector may be determined based on the position information of the vehicle relative to the reference position in the plurality of the video frames (also referred to as queue information, such as a displacement queue). For example, as shown in FIG. 8 or FIG. 9, after the vehicle enters the region, among the plurality of video frames (for example, N frames), the count of video frames with a displacement vector greater than 0 is greater than the threshold (for example, N/2), the processing device 130 may determine that the direction of the vehicle displacement vector is the direction of the displacement vector when the displacement vector is greater than 0 (indicates the travel direction of the vehicle is the incoming direction); if the count of video frames with the displacement vector less than 0 is greater than a threshold (for example, N/2), the processing device 130 may determine that the displacement vector direction of the vehicle is a direction when the displacement vector is less than 0 (indicates the travel direction of the vehicle is the outgoing direction).

In 520, the travel direction of the vehicle may be determined based on the position information of the vehicle relative to the reference position. In some embodiments, operation 520 may be performed by the processing device 130 (e.g., detection module).

In some embodiments, after determining the position information of the vehicle relative to the reference position, the travel direction indicated by the displacement vector direction may be determined as the travel direction of the vehicle. Through this embodiment, based on the position information of the vehicle relative to the reference position, it is possible to efficiently and automatically determine whether the vehicle is an incoming vehicle or an outgoing vehicle.

In some embodiments, the travel direction of the vehicle may be determined based on the position information relative to the reference position and the vehicle tail information (for example, taillight information).

In some embodiments, the travel direction of the vehicle may further include a reverse direction.

After the vehicle entering into the region, if the vehicle has passed the detection region (for example, the license plate detection region, or the snap position), the vehicle may be in reverse. As mentioned above (FIG. 3 and related descriptions), after determining that the travel direction of the vehicle is the incoming direction, if the front window of the vehicle is recognized in one or more subsequent video frames, the processing device 130 may be determined that the incoming vehicle is reversing; if the front window of the vehicle is not recognized in one or more subsequent video frames, the processing device 130 may be determined that the incoming vehicle may be not reverse.

More descriptions for determining the travel direction of the vehicle may be found elsewhere in the present disclosure. See, FIGs. 7 and 11 and their related descriptions thereof.

Through the combination of the vehicle displacement, the vehicle window related information, and the vehicle tail related information to determine the travel direction of the vehicle, a diversified and coordinated determination of the plurality of targets may be achieved, and the result of misjudgment caused by a single variable may be effectively optimized.

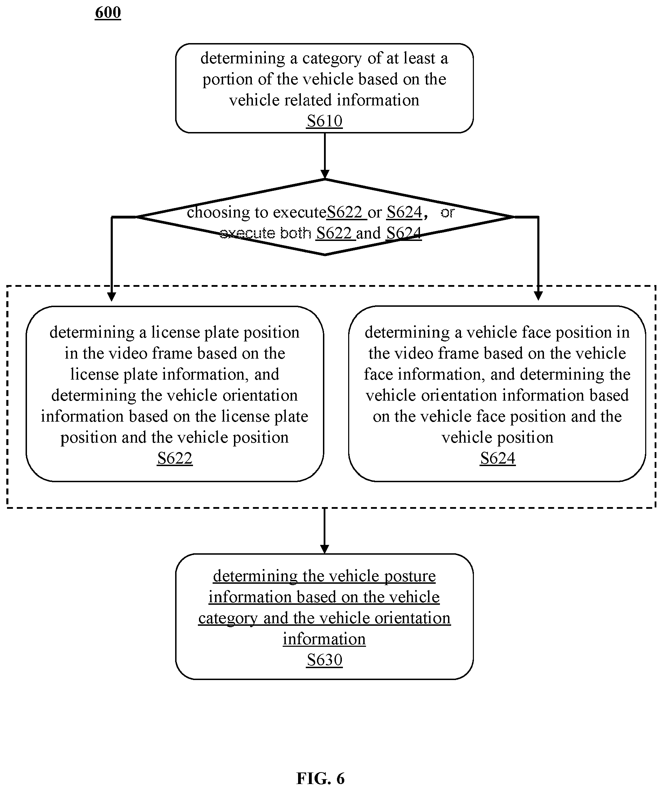

FIG. 6 is a flowchart illustrating an exemplary process for vehicle detection according to other embodiments of the present disclosure. As shown in FIG. 6, process 600 may include the following operations. In some embodiments, process 600 may be executed by the processing device 130.

In some embodiments, the vehicle posture information in a video frame (such as a snap image of the vehicle or other video frames) may be determined based on process 600. In some embodiments, the snap image of the vehicle may be determined according to process 400 as described in FIG. 4.

In 610, a category of at least a portion of a vehicle in a region may be determined based on vehicle information. In some embodiments, operation 610 may be performed by the processing device 130 (e.g., the detection module). The region may be determined as described in connection with operation 210 in FIG. 2. The vehicle information may be determined as described in connection with operation 210 in FIG. 2.

In some embodiments, the category of at least a portion of the vehicle may include one of the vehicle head and the vehicle tail.

In some embodiments, if the processing device 130 determines that the vehicle information includes the vehicle head information, the category of at least a portion of the vehicle may be determined to be the vehicle head.

In some embodiments, if the processing device 130 determines that the vehicle information includes the vehicle tail information, the category of at least a portion of the vehicle may be determined to be the vehicle tail.

In some embodiments, a vehicle position may be determined based on vehicle information. In some embodiments, the vehicle position may refer to the position of the center point of the vehicle outline or other points on the centerline of the vehicle outline in the video frame.

In 622, a license plate position in the video frame may be determined based on the license plate information, and the vehicle orientation information may be determined based on the license plate position and the vehicle position. In some embodiments, operation 622 may be performed by the processing device 130 (e.g., detection module).

The vehicle orientation information may refer to the orientation information between the vehicle body and the vertical direction in the region in the video, such as orientation and orientation angle, etc. The orientation may include the left deviation orientation, the right deviation orientation, and the positive orientation. The vehicle orientation information may reflect the orientation information between the travel direction of the vehicle and the vertical direction, such as the orientation of the travel direction, and the orientation angle of the travel direction.

In some embodiments, the license plate position may refer to the position of the center point of the license plate outline or other points on the centerline of the license plate outline in the video frame.

In some embodiments, the vehicle orientation information (such as vehicle orientation angle) may be determined based on the vector angle θ of the vector formed by the license plate position and the vehicle position in the vertical direction. More descriptions for determining vehicle orientation information based on the license plate position and the vehicle position, please refer to FIG. 12 and related descriptions. In the related descriptions of FIG. 12, the center point of a license plate box that enclosing the license plate may be replaced with other points on the centerline of the license plate outline, and the center point of the vehicle box that enclosing the vehicle may also be replaced with other points on the centerline of the vehicle outline. The connection between the other points on the centerline of the license plate outline and the other points on the centerline of the vehicle outline may be parallel to the connection line between the center point of the license plate box and the center point of the vehicle box.

In 624, a vehicle face position in the video frame may be determined based on the vehicle face information, and the vehicle orientation information may be determined based on the vehicle face position and the vehicle position. In some embodiments, operation 624 may be performed by the processing device 130 (e.g., detection module).

In some embodiments, the vehicle face position may refer to the position of the center point of the vehicle face outline or other points on the centerline of the vehicle face outline in the video frame.

In some embodiments, the vehicle orientation information (for example, the vehicle orientation angle) may be determined based on the vector angle θ of the vector formed by the vehicle face position and the vehicle position in the vertical direction. More descriptions for determining the vehicle orientation information based on the vehicle face position and the vehicle position, please refer to FIGs. 7, 13 and14 and their related descriptions. The manner of determining the connection between the vehicle face position and the vehicle position is similar to the manner of determining the connection line between the license plate position and the vehicle position.

In some embodiments, any one of operation 622 and operation 624 may be configured to determine vehicle orientation information according to requirements. For example, if the vehicle does not have the license plate in the video frame, operation 624 may be selected to determine the vehicle orientation information.

In some embodiments, first vehicle orientation information may be obtained based on operation 622, and second vehicle orientation information may be obtained based on operation 624. Further, a first weight may be determined for the first vehicle orientation information, and a second weight may be determined for the second vehicle orientation information. Based on the first weight $a$, the first vehicle orientation information $\theta_1$, the second weight b, and the second vehicle orientation information $\theta_2$, the vehicle orientation information, and the vehicle orientation information may be used as the vehicle orientation information $\theta$ of the vehicle according to Equation (1) as follows:

$$\theta = a\theta_1 + b\theta_2 \quad (1)$$

Through this embodiment, it is possible to realize the diversified coordinated determination of the vehicle orientation information based on the license plate orientation and the vehicle face orientation, which can effectively optimize the inaccurate results caused by the single-target vehicle information.

In some embodiments, the first weight may be determined based on the size of the license plate. In some embodiments, the second weight may be determined based on the size of the license plate. The size of the license plate may be the area of the region covered by the license plate outline. Through this embodiment, it is possible to consider the influence of the different ratios of the vehicle face size and the license plate size of vehicles of different models on the determination of the orientation information, so that the determined vehicle orientation information is more accurate.

In 630, vehicle posture information is based on the vehicle category and the vehicle orientation information. In some embodiments, operation 630 may be performed by the processing device 130 (e.g., detection module).

In some embodiments, the vehicle posture information may be determined based on whether the vehicle is the vehicle head or the vehicle tail, and the vehicle orientation information. For example, the vehicle posture information may include the orientation of the vehicle head and the orientation angle of the vehicle head. As another example, the vehicle posture information may include the orientation of the vehicle tail and the orientation angle of the vehicle tail. More descriptions for determining the vehicle posture information, please refer to FIG. 12 and its related descriptions.

To clearer illustrate the technical solutions of the embodiments of the present disclosure, the following will briefly introduce the drawings that need to be used in the descriptions of the embodiments. The drawings in the following descriptions are only some examples or embodiments of the present disclosure. For those of ordinary skill in the art, without creative work, the present disclosure may also be applied to other similar scenarios based on these drawings.

Unless it is obvious from the language environment or otherwise stated, the same reference numerals in the figures represent the same structure or operation.

To solve the problem that the prior art cannot accurately determine the driving state of the vehicle, resulting in the inability to output accurate vehicle charging information or traffic flow information, the present disclosure proposes a vehicle detection method. Please refer to FIG. 7 for details. FIG. 7 is a flowchart illustrating an exemplary process for vehicle detection according to an embodiment of the present disclosure.

The vehicle detection method of the present disclosure is applied to a vehicle detection device. The vehicle detection device of the present disclosure may be a server, a terminal device, or a system in which the server and the terminal device cooperate. Correspondingly, the various parts included in the vehicle detection device, such as the various units, subunits, modules, and submodules, may be all set in the server, may also be all set in the terminal device, or may be set in the server and the terminal device respectively.

Further, the aforementioned server may be hardware or software. When the server is hardware, it can be implemented as a distributed server cluster composed of multiple servers, or as a single server. When the server is software, it can be implemented as multiple software or software modules, for example, a software or software module configured to provide a distributed server, or it can be implemented as a single software or software module, which is not specifically limited here. The vehicle detection device may also be a surveillance device at an entrance and exit, such as a surveillance camera.

As shown in FIG 7, process 700 may include the following operations. In some embodiments, process 700 may be executed by the processing device 130.

In S11, a target surveillance image group may be formed based on obtaining snaped surveillance images continuously.

The vehicle detection device presets the vehicle box confidence threshold *Conf_Score,* the pre-snap line scale factor *Snap_ratio_pre,* the in snap line scale factor *ratio_in,* the out snap line scale factor *ratio_out,* and the category attribute queue length *N*.

The vehicle box confidence threshold is configured to set the starting frame of the target surveillance image group. Specifically, the target detection model of the present disclosure may perform vehicle detection on the surveillance image obtained by the camera in real time and outputs the vehicle box in the image and the corresponding confidence level (the confidence level also may refer to the credibility level). The vehicle detection device uses the surveillance image with the first frame confidence greater than the preset confidence threshold as the starting frame of the target surveillance image group, to ensure the stability of the starting state of the target vehicle, and continuously snap a preset number of surveillance images based on the surveillance image of the starting frame to form a target surveillance image group.

The vehicle detection device further presets the rule line. The preset rule line in this implementation may include the in snap line L3, the out snap line L1, and the pre-snap line L2, please refer to FIG 8 and FIG 9 for details. In other embodiments, the rule line can be added, reduced, or modified based on the needs of the staff, which may not be repeated here. The specific preset process is as follows:

The vehicle detection device obtains the camera parameters of the camera, and based on the camera parameters, determines that the image resolution of the surveillance image is *w * h,* where w is the horizontal resolution, and h is the vertical resolution.

Specifically, when the image resolution of the surveillance image is w * h, Equation (2) for determining the position of the ruled line may be described as follows:

$$pre\_snap\_line = h * snap\_ratio\_pre$$
$$snap\_line\_in = h * ratio\_in \qquad (2)$$
$$snap\_line\_out = h * ratio\_out$$

wherein *pre_snap_line* denotes the pre-snap line, *snap_line_in* denotes the in snap line, and *snap_line_out* denotes the out snap line.

When the vehicle detection device determines that the vehicle box in the surveillance image collected by the camera touches the aforementioned rule line, that is, in the pre-snap line in FIG 8 and FIG 9, the vehicle detection device continuously snaps the surveillance images of the $Num_{CNT}$ frame to form a target surveillance image group.

Further, the vehicle detection device may also determine the start frame of the target surveillance image group by combining two factors: the rule line and the confidence of the vehicle box. For example, the vehicle detection device sets the current frame where the confidence of the vehicle box near the rule line is greater than the preset confidence threshold as the starting frame of the target surveillance image group, filters out the unreliable vehicle box detection results in the initial state, and determines the subsequent displacement vector calculation to ensure the stability of the starting state of the target vehicle.

In S12: a tail light flag of the target surveillance image group may be obtained.

The vehicle detection device calculates the tail light flags of the multiple frame surveillance images in the target surveillance image group through the tail light detection algorithm and combines the tail light flags of the multiple frame surveillance images to distinguish the tail light flags of the target surveillance image group.

Specifically, the vehicle detection device uses all the surveillance images of the target surveillance image group as input images for taillight detection, establishes a tail light queue $Tail_{Queue}$, and traverses all surveillance images. When there is a tail light detection box in the current frame of the surveillance image detected by the tail light, set the tail light flag of the current frame of surveillance image to 1, and store the setting result in the tail light queue; when there is no tail light detection box in the surveillance image of the current frame detected by the tail light, the tail light flag bit of the surveillance image of the current frame is set to 0, and the setting result is stored in the tail light queue.

After the traversal, the vehicle detection device performs a summation operation on the taillight queue to obtain the sum, if $sum > Num_{CNT}/2$, set the final tail light flag bit, that is, the tail light flag bit of the target surveillance image group to 1; if $sum = Num_{CNT}/2$, set the final tail light flag bit, that is, the tail light flag bit of the target surveillance image group to 0.

The present disclosure uses the YOLOV3 target detection training method based on deep learning, sets the CNN convolutional neural network parameters to train the training set data, and obtains the target detection model, the target detection model detects and locates the vehicles, windows, license plates, tail lights, and other targets in the target surveillance image group, and obtains the detection box of each target and the category of each detection box.

Further, since there may be multiple vehicle targets in each frame of the surveillance image, the vehicle detection device may select effective targets that meet the requirements from the vehicle targets detected in the current frame of the surveillance image as the target vehicle through the directional shooting method. The selection rule is to determine whether the center point of the lower boundary of the vehicle box falls within the predetermined detection area.

Specifically, the basic principle of the directional shot intersection method in the embodiment of the present disclosure is as follows:

Assuming that the coordinates of the center point of the lower boundary of the vehicle box denote $P(x, y)$, the detection area is a closed convex polygon Area composed of sequence points $[P_1, P_2, P_3, ... , P_n]$. Take $P(x, y)$ as the endpoint to make a ray $PL$ horizontally to the right, and determine whether the point P is in the convex polygon by calculating the parity of the number of intersections between the ray and each side of the Area. The process of calculating the intersection point is as follows: assuming that the vertices $P_1$ and $P_2$ constitute an edge of the polygon, before calculating the intersection point, it is necessary to determine whether the directional ray $PL$ has an intersection point with the line segment $P1P2$. The discrimination conditions are as shown in Equation (3):

$$\min(y_1, y_2) \le y \le \max(y_1, y_2) \qquad （3）$$

When there is an intersection point between the ray $P_L$ and the line segment $P_1P_2$ the spatial positional relationship between the $P_L$ and the line segment $P_1P_2$ may refer to FIG 10, FIG. 10 is a schematic diagram illustrating an exemplary the spatial position according to some embodiments of the present disclosure.

As shown in FIG 10, based on the similar relationship between $\Delta P_2NP_1$ and $\Delta P_2MP_t$ in the figure, the proportional relationship of Equation (4) may be obtained:

$$\frac{P_2M}{P_2N} = \frac{MP_t}{NP_1} \qquad （4）$$

From the proportional relationship in the above Equation (4), the calculation Equation (5) of the intersection point $P_t$ coordinate $x_t y_t$ of the ray $P_L$ and the line segment $P_1P_2$ may be derived from the Equation (5):

$$\begin{bmatrix} x_t \\ y_t \end{bmatrix} = \begin{bmatrix} (y_2 - y)/(y_2 - y_1) & 0 \\ 0 & 1 \end{bmatrix} \begin{bmatrix} x_2 - x_1 \\ y \end{bmatrix} + \begin{bmatrix} x_2 \\ 0 \end{bmatrix} \qquad （5）$$

It should be noted that the embodiment of the present disclosure adopts a right-direction ray mode, therefore, when the obtained horizontal coordinate $x_t$ of the intersection point $P_t$ is greater than the horizontal coordinate $x$ of the endpoint P, the intersection point $P_t$ may be regarded as a valid intersection point.

The directional shooting method proposed in the embodiment of the present disclosure distinguishes the positional relationship between the center point of the lower boundary of the vehicle box of the target vehicle and the detection area, select effective tracking targets in the detection area, filter out invalid targets, thereby reducing the time complexity of algorithm operation, and optimizing the problem of multi-grabbing invalid targets at entrances and exits.

In addition, since the preset rule lines in the embodiment of the present disclosure may include the in snap line and the out snap line, for the same target vehicle, enabling the in snap line and the out snap line at the same time may easily lead to errors in detection. The present disclosure further provides a method for enabling the snapping line. More descriptions for details please refer to FIG. 11. FIG. 11 is a schematic flowchart illustrating enabling a snap line method according to an embodiment of the present disclosure.

As shown in FIG. 11, process 1100 may include the following operations. In some embodiments, process 1100 may be executed by the processing device 130.

In S21, the category flag of the target vehicle in the target surveillance image group and the vehicle box and/or the license plate box through the target detection model may be obtained.

The vehicle detection device inputs the continuously collected surveillance images in the target surveillance image group into the target detection model, detects and locates the vehicle in each surveillance image, and obtains the vehicle box and/or license plate frame and category flag of the target vehicle. In this embodiment, two different category flags are set according to the front or rear of the vehicle in the surveillance image. For example, the category flag label ID of the surveillance image displaying the front of the target vehicle is set to 0, and the category flag label ID of the surveillance image displaying the rear of the target vehicle is set to 1.

After obtaining the category flags of all the surveillance images, the vehicle detection device establishes a category queue and saves the label ID of the target vehicle's category flags from the start frame to the end frame. Then, the vehicle detection device performs the sum operation through the target vehicle category team, calculates the category flag $C_{Flag}$ of the target surveillance image group, and outputs the category flag $C_{Flag}$ of the target surveillance image group. Specifically, when the cumulative processing result $sum > Num_{CNT}/2$, the category flag $C_{Flag}$ is set to 1, and the position of the vehicle is marked as the rear of the vehicle; when the cumulative processing result $sum < Num_{CNT}/2$, the category flag $C_{Flag}$ is set to 0, and the position of the vehicle is marked as the front of the vehicle.

In S22, when the tail light flag bit and the category flag bit are both the first preset state value, the first snap line is activated.

When the logical and result of the attributes of the tail light flag bit and the category flag bit denotes 1, it may drive out of the snap line enable.

In S23, when the tail light mark is located at the category flag and the second preset state value or one of them is the first preset state value and the other is the second preset state value, the second snap line is activated.

When the logical AND result of the attributes of the tail light flag bit and the category flag bit denotes 0, it may drive into the snap line enable.

In S24, the vehicle displacement vector in the target surveillance image group may be obtained based on the first snap line or the second snap line.

Further, the vehicle detection device obtains the vehicle displacement vector in the target surveillance image group according to the enabled snap line.

Specifically, after the vehicle detection device enables the snap line if the current frame surveillance image effectively tracks the license plate in the target, that is, when the license plate frame is detected, the center point of the lower boundary of the license plate frame is taken as the starting position of the target vehicle displacement, and store in the displacement queue. Then, the vehicle detection device sequentially stores the center points of the lower boundary of the license plate frame of the target vehicle in the subsequent frame surveillance images into the displacement queue until the lower boundary of the license plate frame of the target vehicle touches the *pre_snap_line*. If there is no license plate in the current frame of the surveillance image effectively tracking the target, that is, when the license plate frame cannot be detected, the vehicle box is configured to obtain the vehicle displacement vector, and the process is not repeated here.

Using the license plate frame as the object of displacement statistics may avoid the situation that when the size of the target vehicle is large, the lower boundary of the vehicle box is close to the edge of the surveillance image and the displacement of the target vehicle is not obvious.

In S13, the vehicle displacement vector based on the target surveillance image group and a displacement flag may be obtained based on the vehicle displacement vector.

The vehicle detection device statistically detects the positive and negative values of the displacement vector $\Delta dy$ of the target vehicle during the movement of the target vehicle from the start frame to the end frame and sets the output of the displacement flag $\Delta dy_{Flag}$ through the positive and negative values of the displacement vector $\Delta dy$.

Specifically, when the target vehicle displacement vector $\Delta dy$ is a positive value, the displacement flag $\Delta dy_{Flag}$ of the target vehicle is set to 0, and it is determined that the driving state of the target vehicle is the entering state; when the target vehicle displacement vector $\Delta dy$ is a negative value, the displacement flag $\Delta dy_{Flag}$ of the target vehicle is set to 1, and it is determined that the driving state of the target vehicle is the driving state.

In S14, the vehicle window flag position may be obtained based on the target surveillance image group.

The vehicle detection device uses all the surveillance images of the target surveillance image group as the input images of the vehicle window detection, establishes a vehicle window queue $VW_{Queue}$, and traverses all the surveillance images. When there is a window detection frame in the surveillance image of the current frame of the vehicle window detection, set the window flag of the surveillance image of the current frame to 1, and store the setting result in the window queue; when there is no window detection frame in the surveillance image of the current frame of the vehicle window detection, the window flag of the surveillance image of the current frame is set to 0, and the setting result is stored in the window queue.

After the traversal, the vehicle detection device performs a summation operation on the window queue to obtain the sum. If $sum > Num_{CNT}/2$, set the final window mark position, that is, the window mark position of the target surveillance image group to 1; if $sum = Num_{CNT}/2$, set the final window flag bit, that is, the window flag bit of the target surveillance image group to 0.

In S15, a coding sequence may be formed based on using the displacement flag bit, the window flag bit, and the tail light flag bit, and the vehicle state of the target vehicle may be obtained according to the coding value of the coding sequence.

The vehicle detection device uses the binary coded value composed of the displacement flag bit, the window flag bit, and the tail light flag bit to determine the driving state of the target vehicle.

When the status value of the displacement flag denotes 1, it means that the current vehicle status is the incoming vehicle, and the status value denotes 0, which means that it is the outgoing vehicle. The state value of the window flag is used as the auxiliary judgment for the incoming vehicle in the reverse state; the state value of the tail light flag is used as the auxiliary judgment condition for the incoming vehicle. The diversified collaborative discrimination method of status flags may effectively optimize the misjudgment result caused by a single variable. The binary code table is as follows:

| The displacement flag bit/$\Delta S\_Flag$ | The window flag bit /$VW\_Flag$ | The tail light flag bit /$CL\_Flag$ | The binary coded value | Vehicle status |
|---|---|---|---|---|
| 1 | 1 | 0 | 6 | Incoming |
| 0 | 0 | 1 | 1 | Outgoing |
| 0 | 1 | 0 | 2 | Reverse |

It should be noted that the embodiments of the present disclosure may also adopt other types of coding modes or coding methods, which may not be repeated here.

Further, when the lower boundary of the vehicle box of the target vehicle touches the *pre_snap_line,* the image content included in the vehicle box is sent to the license plate recognition module for license plate recognition, and select the current stable recognition result of the target vehicle as to the final license plate recognition result.

When the lower boundary of the vehicle box of the target vehicle touches the currently enabled snap line, the snap operation is started, and the current tracking serial number of the target vehicle and the optimized license plate recognition result is saved.

Further, if the current target vehicle does not recognize the license plate frame, the secondary snap recognition function is triggered. More descriptions for details please refer to FIG. 12. FIG. 12 is a flow chart illustrating an exemplary process for unlicensed vehicle decision logic according to some embodiments of the present disclosure.

As shown in FIG 12, the vehicle detection device performs secondary identification and snap operations by detecting the numerical relationship between the window reverse displacement $\Delta s$ of the target vehicle in the current tracking queue and the set threshold $T\_dis$. If the vehicle driving state is in the reverse state, and the reverse displacement exceeds the set threshold $T\_dis$ and the first secondary identification condition, that is, the reverse displacement is greater than the set threshold $T\_dis,$ and the secondary identification flag $SR\_Flag$ state value is 0, then carry out a second snap and license plate recognition, otherwise the current vehicle may be set as an unlicensed vehicle and the result may be output.

The unlicensed vehicle determination logic proposed in the embodiment of the present disclosure may realize the secondary identification and snap operation of unlicensed vehicles after capturing, effectively reducing the possibility of misjudgment of unlicensed vehicles.

In addition, for a licensed target vehicle, the vehicle attitude of the target vehicle may be estimated by the vertical vector angle θ of the vehicle orientation angle of the vehicle box, which is composed of the center points of the license plate box and the vehicle box.

Specifically, assuming that the center point coordinates of the vehicle box OD of the vehicle are $P\_od(x\_od, y\_od)$ and the center point coordinates of the license plate frame PD are $P\_pd(x\_pd, y\_pd)$, the estimation equation (6) of the vehicle orientation angle is as follows:

$$\Delta y = y\_od - y\_pd$$
$$\Delta x = x\_od - x\_pd$$
$$\theta = arc\cot\left|\frac{\Delta x}{\Delta y}\right|$$

（6）

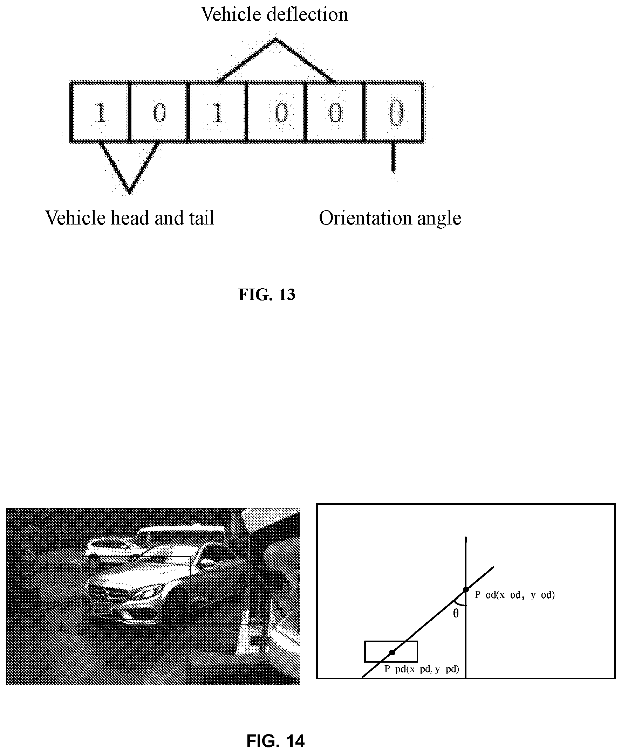

It should be noted that when $\Delta x$ is a positive number, it means the vehicle is deviating to the left; when $\Delta x$ is a negative number, it means the vehicle is deviating to the right; when $\Delta x$ is near zero, it indicates the forward direction of the vehicle, and the front/rear attributes of the vehicle are judged by the category attributes of the vehicle box. The final vehicle posture information is output in the form of a posture encoding sequence composed of three parts of the vehicle head and the vehicle tail, vehicle deflection and orientation angle $\theta$, and different elements in the same attribute are mutually exclusive. Specifically, the code sequence elements are the front of the vehicle, the rear of the vehicle, the left deflection, the right deflection, the forward direction, and the orientation angle in sequence. Assuming that the posture information of the target vehicle is left-biased $\theta$, its posture coding sequence is shown in FIG. 13.

For unlicensed target vehicles, the face part of the target vehicle may be detected to output the detection frame of the face part, that is, the face frame. The orientation angle $\theta$ may be calculated by using the center point of the vehicle face frame instead of the center point of the license plate frame, and the calculation process may not be repeated here. Refer to FIG 14 for a schematic diagram of the vehicle posture calculated using the face frame.

The vehicle detection device of the embodiment of the present disclosure forms a target surveillance image group by acquiring continuously snaped surveillance images; acquiring the tail light mark position of the target surveillance image group; acquiring the vehicle displacement vector based on the target surveillance image group, and acquiring the displacement flag based on the vehicle displacement vector bit; based on the target surveillance image group to obtain the window flag; use the displacement flag, the window flag, and the category flag to form a coding sequence, and obtain the vehicle status of the target vehicle according to the coding value of the coding sequence, and use the displacement flag, the window marking position and the taillight marking position constitute diversified collaborative discrimination, which may effectively improve the accuracy of the vehicle detection method.

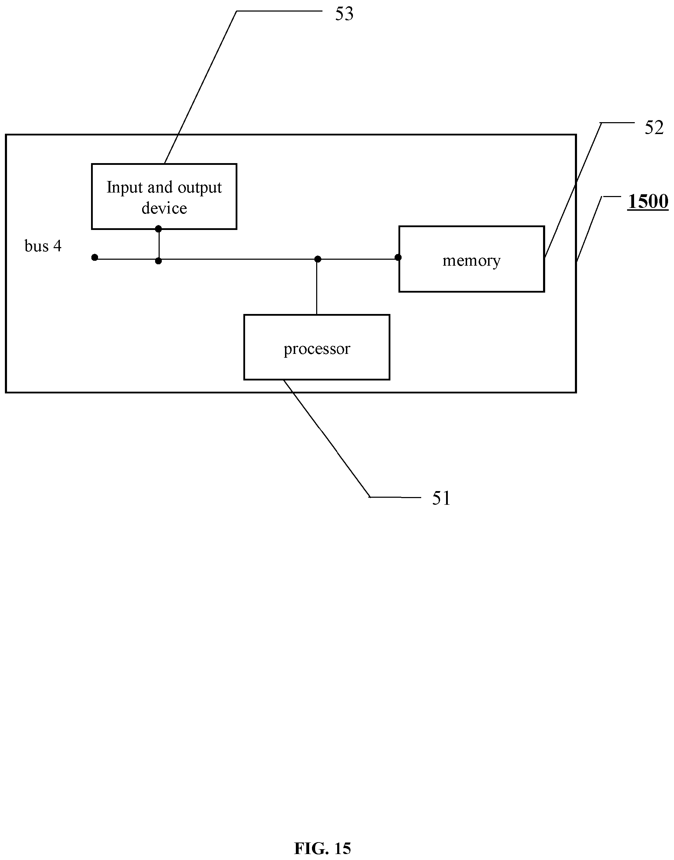

To implement the vehicle detection method of the foregoing embodiment, the present disclosure also provides a vehicle detection device. More descriptions for details please refer to FIG. 15. FIG. 15 is a schematic structural diagram of an embodiment of the vehicle detection device according to some embodiments of the present disclosure.

As shown in FIG. 15, the vehicle detection device 1500 of this embodiment includes a processor 51, a memory 52, an input and output device 53, and a bus 54.

The processor 51, the memory 52, and the input/output device 53 are respectively connected to bus 54. The memory 52 stores a computer program, and processor 51 is configured to execute the computer program to implement the vehicle detection method of the foregoing embodiment.

In this embodiment, the processor 51 may also be referred to as a CPU (Central Processing Unit, central processing unit). The processor 51 may be an integrated circuit chip with signal processing capability. The processor 51 may also be a general-purpose processor, a digital signal processor (DSP), an application specific integrated circuit (ASIC), a field programmable gate array (FPGA), or other programmable logic device, a discrete gate or transistor logic device, or a discrete hardware component. The processor 51 can also be a GPU (Graphics Processing Unit, graphics processor), also known as a display core, a visual processor, and a display chip. Microprocessor for image calculation on smartphones, etc. The purpose of GPU is to convert and drive the display information required by the computer system and provide line scan signals to the display to control the correct display of the display. It is an important component for connecting the display to the PC motherboard and one of the important equipment of "human-machine dialogue". As an important part of the computer host, the graphics card is responsible for the task of outputting and displaying graphics. The graphics card is very important for those engaged in professional graphic design. The general-purpose processor may be a microprocessor or the processor 51 may also be any conventional processor or the like.

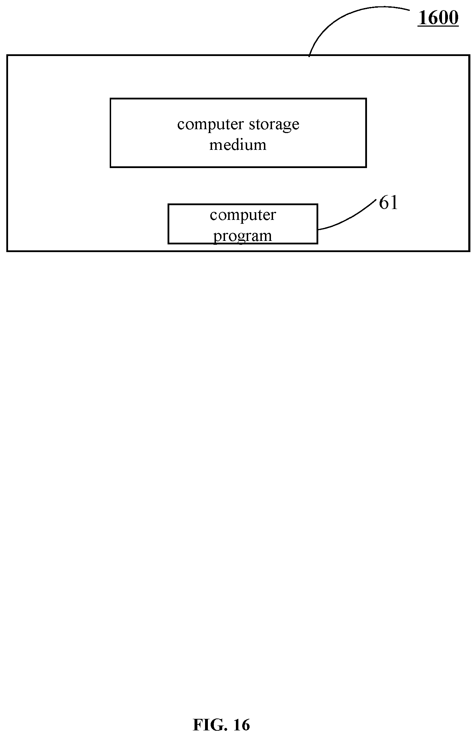

The present disclosure also provides a computer storage medium. As shown in FIG. 16, the computer storage medium 1600 is configured to store a computer program 61. When the computer program 61 is executed by a processor, it is configured to implement the method as described in the embodiment of the vehicle detection method of the present disclosure.

The methods involved in the embodiments of the vehicle detection method of the present disclosure, when implemented in the form of a software functional units and sold or used as independent products, may be stored in the device, such as a computer readable storage medium. Based on this understanding, the technical solution of the present disclosure essentially or the part that contributes to the existing technology or all or part of the technical solution may be embodied in the form of a software product, and the computer software product is stored in a storage medium, including several instructions to make a computer device (which may be a personal computer, a server, or a network device, etc.) or a processor (processor) execute all or part of the steps of the methods described in the various embodiments of the present disclosure. The aforementioned storage media include U disk, mobile hard disk, read-only memory (ROM, Read-Only Memory), random access memory (RAM, Random Access Memory), magnetic disks or optical disks, and other media that can store program codes.

The above are only implementations of the present disclosure, and not intended to limit the scope of the present disclosure. Any equivalent structure or equivalent process transformation made by using the contents of the descriptions and drawings of the present disclosure, or directly or indirectly used in other related technical fields, are similarly included in the scope of patent protection of the present disclosure.

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended for those skilled in the art, though not expressly stated herein. These alterations, improvements, and modifications are intended to be suggested by this disclosure and are within the scope of the exemplary embodiments of this disclosure.

Meanwhile, certain terminology has been used to describe embodiments of the present disclosure. For example, the terms "one embodiment," "an embodiment," and/or "some embodiments" mean that a particular feature, structure, or characteristic described in connection with the embodiment is in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in smaller than all features of a single foregoing disclosed embodiment.

In some embodiments, the numbers expressing quantities, properties, and so forth, used to describe and claim certain embodiments of the application are to be understood as being modified in some instances by the term "about," "approximate," or "substantially." For example, "about," "approximate" or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting effect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

**Claims**

1. A method for vehicle detection, comprising:

obtaining a video of a region;
determining vehicle information in the video by recognizing a vehicle in the video; and
determining a detection result of the vehicle based on the vehicle information, including:

determining a category of at least a portion of the vehicle in the region based on the vehicle information, wherein the category includes one of a vehicle head and a vehicle tail;
determining a snap position in the region based on the category, the snap position includes one of a first snap position and a second snap position, the first snap position and the second snap position being an incoming snap position and an outgoing snap position;
determining a positional relationship between a vehicle position and the snap position in the region corresponding to at least one video frame based on the vehicle information; and
determining a video frame corresponding to the positional relationship that meets a first preset condition as a snap image of the vehicle, the first preset condition being satisfied that the vehicle position in the video frame is close to the snap position and a distance from the snap position to the vehicle position is less than a threshold.

2. The method of claim 1, wherein the determining vehicle information in the video by recognizing the vehicle in the video includes:

determining at least one recognition result of the vehicle by recognizing the vehicle in the at least one video frame, wherein the at least one recognition result of the vehicle include the vehicle information corresponding to the at least one video frame;
determining a credibility level associated with the vehicle information of the vehicle based on the at least one recognition result;
determining that the credibility level satisfies a second preset condition; and
determining the vehicle information of the vehicle associated with the credibility level.

3. The method of claim 2, wherein the determining the credibility level associated with the vehicle information of the vehicle based on the at least one recognition result includes:
determining the credibility level associated with the vehicle information of the vehicle based on a count of target vehicle information in a plurality of recognition results corresponding to a plurality of video frames.

4. The method of claim 1, wherein the detection result indicates whether the vehicle includes a license plate; and
the determining the detection result of the vehicle based on the vehicle information includes:

determining whether the license plate of the vehicle is available based on the vehicle information;
in response to determining that the license plate of the vehicle is unavailable, determining whether to perform a second detection on the license plate of the vehicle from the video;
in response to determining to perform the second detection on the license plate of the vehicle from the video, determining second vehicle information in the video by continuing to recognize the vehicle in at least one other video frame of the video, and determining the detection result of the vehicle based on the second vehicle information;
in response to determining not to perform the second detection, determining the detection result of the vehicle indicating that the vehicle does not have the license plate.

5. The method of claim 4, wherein the determining whether to perform the second detection includes:

determining whether the vehicle is in reverse;
in response to determining that the vehicle is in reverse, determining to perform the second detection; or
in response to determining that the vehicle is not in reverse, determining not to perform the second detection.

6. The method of claim 1, wherein the detection result includes a travel direction of the vehicle; and
the determining the detection result of the vehicle based on the vehicle information includes:

determining position information of the vehicle relative to a reference position in the region based on the vehicle information; and
determining the travel direction of the vehicle based on the position information of the vehicle relative to the reference position.

7. The method of claim 1, wherein the vehicle information includes one of license plate information and vehicle face information represented in a frame and vehicle related information represented in the frame;

the detection result includes vehicle posture information; and
the determining the detection result of the vehicle based on the vehicle information includes:

determining the category of at least a portion of the vehicle based on the vehicle related information;
determining vehicle orientation information based on at least one of the license plate information and the vehicle face information; and
determining the vehicle posture information based on the category of at least a portion of the vehicle and the vehicle orientation information.

8. The method of claim 7, wherein the determining vehicle orientation information based on at least one of the license plate information and the vehicle face information includes:

determining the vehicle position based on the vehicle related information;
determining the vehicle orientation information by at least one of the following two methods:

determining a license plate position in the video frame based on the license plate information, and determining the vehicle orientation information based on the license plate position and the vehicle position; and
determining a vehicle face position in the video frame based on the vehicle face information, and determining the vehicle orientation information based on the vehicle face position and the vehicle position.

9. The method of claim 1, wherein the determining the vehicle information in the video by recognizing the vehicle in the video includes:

determining whether the vehicle in the region is within an effective region by recognizing the vehicle in the at least one video frame of the video; and
determining the vehicle information for the vehicle in the effective region in the region.

10. A system for vehicle detection, comprising:

at least one storage medium including a set of instructions; and
at least one processor configured to communicate with the at least one storage medium, wherein when executing the set of instructions, the at least one processor is directed to:

obtaining a video of a region;
determining vehicle information in the video by recognizing a vehicle in the video; and
determining a detection result of the vehicle based on the vehicle information, including:

determining a category of at least a portion of the vehicle in the region based on the vehicle information, wherein the category includes one of a vehicle head and a vehicle tail;
determining a snap position in the region based on the category, the snap position includes one of a first snap position and a second snap position, the first snap position and the second snap position being an incoming snap position and an outgoing snap position;
determining a positional relationship between a vehicle position and the snap position in the region corresponding to at least one video frame based on the vehicle information; and
determining a video frame corresponding to the positional relationship that meets a first preset condition as a snap image of the vehicle, the first preset condition being satisfied that the vehicle position in the video frame is close to the snap position and a distance from the snap position to the vehicle position is less than a threshold.

11. The system of claim 10, wherein the determining vehicle information in the video by recognizing the vehicle in video includes:

determining at least one recognition result of the vehicle by recognizing the vehicle in the at least one video frame, wherein the at least one recognition result of the vehicle include the vehicle information corresponding to the at least one video frame;
determining a credibility level associated with the vehicle information of the vehicle based on the at least one recognition result;
determining that the credibility level satisfies a second preset condition; and
determining the vehicle information of the vehicle associated with the credibility level.

12. The system of claim 10, wherein the detection result indicating whether the vehicle includes a license plate; and the determining the detection result of the vehicle based on the vehicle information includes:

determining whether the license plate of the vehicle is available based on the vehicle information;
in response to determining that the license plate of the vehicle is unavailable, determining whether to perform a second detection on the license plate of the vehicle from the video;
in response to determining to perform the second detection on the license plate of the vehicle from the video, determining second vehicle information in the video by continuing to recognize the vehicle in at least one other video frame of the video, and determining the detection result of the vehicle based on the second vehicle information;
in response to determining not to perform the second detection, determining the detection result of the vehicle indicating that the vehicle does not have the license plate.

13. A non-transitory computer readable medium, comprising at least one set of instructions for vehicle detection, wherein when executed by at least one processor of a computing device, the at least one set of instructions causes the computing device to perform a method, the method comprising:

obtaining a video of a region;
determining vehicle information in the video by recognizing a vehicle in the video; and
determining a detection result of the vehicle based on the vehicle information, including:

determining a category of at least a portion of the vehicle in the region based on the vehicle information, wherein the category includes one of a vehicle head and a vehicle tail;
determining a snap position in the region based on the category, the snap position includes one of a first snap position and a second snap position, the first snap position and the second snap position being an incoming snap position and an outgoing snap position;
determining a positional relationship between a vehicle position and the snap position in the region corresponding to at least one video frame based on the vehicle information; and
determining a video frame corresponding to the positional relationship that meets a first preset condition as a snap image of the vehicle, the first preset condition being satisfied that the vehicle position in the video frame is close to the snap position and a distance from the snap position to the vehicle position is less than a threshold.

**Patentansprüche**

1. Verfahren zur Fahrzeugdetektion, umfassend:

Erhalten eines Videos eines Bereichs;
Bestimmen von Fahrzeuginformationen in dem Video durch Erkennen eines Fahrzeugs in dem Video; und
Bestimmen eines Detektionsergebnisses des Fahrzeugs auf Basis der Fahrzeuginformationen, was Folgendes beinhaltet:

Bestimmen einer Kategorie mindestens eines Abschnitts des Fahrzeugs in dem Bereich auf Basis der Fahrzeuginformationen, wobei die Kategorie eines von einer Fahrzeugfront und einem Fahrzeugheck beinhaltet;
Bestimmen einer Aufnahmeposition in dem Bereich auf Basis der Kategorie, wobei die Aufnahmeposition eines von einer ersten Aufnahmeposition und einer zweiten Aufnahmeposition beinhaltet, wobei die erste Aufnahmeposition und die zweite Aufnahmeposition eine einfahrende Aufnahmeposition und eine ausfahrende Aufnahmeposition sind;

Bestimmen einer Positionsbeziehung zwischen einer Fahrzeugposition und der Aufnahmeposition in dem Bereich, die mindestens einem Videoeinzelbild entspricht, auf Basis der Fahrzeuginformationen; und

Bestimmen eines Videoeinzelbildes, das der Positionsbeziehung entspricht, die eine erste voreingestellte Bedingung erfüllt, als Aufnahmebild des Fahrzeugs, wobei die erste voreingestellte Bedingung erfüllt ist, wenn sich die Fahrzeugposition in dem Videoeinzelbild nahe der Aufnahmeposition befindet und eine Entfernung von der Aufnahmeposition zur Fahrzeugposition kleiner als eine Schwelle ist.

2. Verfahren nach Anspruch 1, wobei das Bestimmen von Fahrzeuginformationen in dem Video durch Erkennen des Fahrzeugs in dem Video beinhaltet:

Bestimmen mindestens eines Erkennungsergebnisses des Fahrzeugs durch Erkennen des Fahrzeugs in dem mindestens einen Videoeinzelbild, wobei das mindestens eine Erkennungsergebnis des Fahrzeugs die Fahrzeuginformationen beinhaltet, die dem mindestens einen Videoeinzelbild entsprechen;

Bestimmen eines Glaubwürdigkeitsniveaus, das den Fahrzeuginformationen des Fahrzeugs zugeordnet ist, auf Basis des mindestens einen Erkennungsergebnisses;

Bestimmen, dass das Glaubwürdigkeitsniveau eine zweite voreingestellte Bedingung erfüllt; und

Bestimmen der Fahrzeuginformationen des Fahrzeugs, die dem Glaubwürdigkeitsniveau zugeordnet sind.

3. Verfahren nach Anspruch 2, wobei das Bestimmen des Glaubwürdigkeitsniveaus, das den Fahrzeuginformationen des Fahrzeugs zugeordnet ist, auf Basis des mindestens einen Erkennungsergebnisses beinhaltet:

Bestimmen des Glaubwürdigkeitsniveaus, das den Fahrzeuginformationen des Fahrzeugs zugeordnet ist, auf Basis einer Zählung von Zielfahrzeuginformationen in einer Vielzahl von Erkennungsergebnissen, die einer Vielzahl von Videoeinzelbildern entsprechen.

4. Verfahren nach Anspruch 1, wobei das Detektionsergebnis angibt, ob das Fahrzeug ein Nummernschild beinhaltet; und

das Bestimmen des Detektionsergebnisses des Fahrzeugs auf Basis der Fahrzeuginformationen beinhaltet:

Bestimmen, auf Basis der Fahrzeuginformationen, ob das Nummernschild des Fahrzeugs verfügbar ist;

in Reaktion auf das Bestimmen, dass das Nummernschild des Fahrzeugs nicht verfügbar ist, Bestimmen, ob anhand des Videos eine zweite Detektion des Nummernschilds des Fahrzeugs durchgeführt werden soll;

in Reaktion auf das Bestimmen, dass anhand des Videos die zweite Detektion des Nummernschilds des Fahrzeugs durchgeführt werden soll, Bestimmen von zweiten Fahrzeuginformationen in dem Video durch Fortsetzen des Erkennens des Fahrzeugs in mindestens einem anderen Videoeinzelbild des Videos, und Bestimmen des Detektionsergebnisses des Fahrzeugs auf Basis der zweiten Fahrzeuginformationen;

in Reaktion auf das Bestimmen, dass die zweite Detektion nicht durchgeführt werden soll, Bestimmen, dass das Detektionsergebnis des Fahrzeugs angibt, dass das Fahrzeug das Nummernschild nicht aufweist.

5. Verfahren nach Anspruch 4, wobei das Bestimmen, ob die zweite Detektion durchgeführt werden soll, beinhaltet:

Bestimmen, ob das Fahrzeug rückwärtsfährt;

in Reaktion auf das Bestimmen, dass das Fahrzeug rückwärtsfährt, Bestimmen, dass die zweite Detektion durchgeführt werden soll; oder

in Reaktion auf das Bestimmen, dass das Fahrzeug nicht rückwärtsfährt, Bestimmen, dass die zweite Detektion nicht durchgeführt werden soll.

6. Verfahren nach Anspruch 1, wobei das Detektionsergebnis eine Fahrtrichtung des Fahrzeugs beinhaltet; und

das Bestimmen des Detektionsergebnisses des Fahrzeugs auf Basis der Fahrzeuginformationen beinhaltet:

Bestimmen von Positionsinformationen des Fahrzeugs relativ zu einer Referenzposition in dem Bereich auf Basis der Fahrzeuginformationen; und

Bestimmen der Fahrtrichtung des Fahrzeugs auf Basis der Positionsinformationen des Fahrzeugs relativ zur Referenzposition.

7. Verfahren nach Anspruch 1, wobei die Fahrzeuginformationen eines von Nummernschildinformationen und Fahrzeugvorderseiteninformationen, die in einem Einzelbild dargestellt sind, und fahrzeugbezogenen Informationen, die in dem Einzelbild dargestellt sind, beinhalten;

das Detektionsergebnis Fahrzeugstellungsinformationen beinhaltet; und
das Bestimmen des Detektionsergebnisses des Fahrzeugs auf Basis der Fahrzeuginformationen beinhaltet:

Bestimmen der Kategorie mindestens eines Abschnitts des Fahrzeugs auf Basis der fahrzeugbezogenen Informationen;
Bestimmen von Fahrzeugausrichtungsinformationen auf Basis mindestens eines der Nummernschildinformationen und der Fahrzeugvorderseiteninformationen; und
Bestimmen der Fahrzeugstellungsinformationen auf Basis der Kategorie mindestens eines Abschnitts des Fahrzeugs und der Fahrzeugausrichtungsinformationen.

8. Verfahren nach Anspruch 7, wobei das Bestimmen von Fahrzeugausrichtungsinformationen auf Basis mindestens eines der Nummernschildinformationen und der Fahrzeugvorderseiteninformationen beinhaltet:

Bestimmen der Fahrzeugposition auf Basis der fahrzeugbezogenen Informationen;
Bestimmen der Fahrzeugausrichtungsinformationen über mindestens eines der folgenden zwei Verfahren:

Bestimmen einer Nummernschildposition in dem Videoeinzelbild auf Basis der Nummernschildinformationen, und Bestimmen der Fahrzeugausrichtungsinformationen auf Basis der Nummernschildposition und der Fahrzeugposition; und
Bestimmen einer Fahrzeugvorderseitenposition in dem Videoeinzelbild auf Basis der Fahrzeugvorderseiteninformationen, und Bestimmen der Fahrzeugausrichtungsinformationen auf Basis der Fahrzeugvorderseitenposition und der Fahrzeugposition.

9. Verfahren nach Anspruch 1, wobei das Bestimmen der Fahrzeuginformationen in dem Video durch Erkennen des Fahrzeugs in dem Video beinhaltet:

Bestimmen, durch Erkennen des Fahrzeugs in dem mindestens einen Videoeinzelbild des Videos, ob sich das Fahrzeug in dem Bereich innerhalb eines Wirkbereichs befindet; und
Bestimmen der Fahrzeuginformationen für das Fahrzeug in dem Wirkbereich in dem Bereich.

10. System zur Fahrzeugdetektion, umfassend:

mindestens ein Speichermedium, das einen Satz Anweisungen beinhaltet; und
mindestens einen Prozessor, der so konfiguriert ist, dass er mit dem mindestens einen Speichermedium kommuniziert, wobei der mindestens eine Prozessor, wenn er den Satz Anweisungen ausführt, angeleitet wird zum:

Erhalten eines Videos eines Bereichs;
Bestimmen von Fahrzeuginformationen in dem Video durch Erkennen eines Fahrzeugs in dem Video; und
Bestimmen eines Detektionsergebnisses des Fahrzeugs auf Basis der Fahrzeuginformationen, was Folgendes beinhaltet:

Bestimmen einer Kategorie mindestens eines Abschnitts des Fahrzeugs in dem Bereich auf Basis der Fahrzeuginformationen, wobei die Kategorie eines von einer Fahrzeugfront und einem Fahrzeugheck beinhaltet;
Bestimmen einer Aufnahmeposition in dem Bereich auf Basis der Kategorie, wobei die Aufnahmeposition eines von einer ersten Aufnahmeposition und einer zweiten Aufnahmeposition beinhaltet, wobei die erste Aufnahmeposition und die zweite Aufnahmeposition eine einfahrende Aufnahmeposition und eine ausfahrende Aufnahmeposition sind;
Bestimmen einer Positionsbeziehung zwischen einer Fahrzeugposition und der Aufnahmeposition in dem Bereich, die mindestens einem Videoeinzelbild entspricht, auf Basis der Fahrzeuginformationen; und
Bestimmen eines Videoeinzelbildes, das der Positionsbeziehung entspricht, die eine erste voreingestellte Bedingung erfüllt, als Aufnahmebild des Fahrzeugs, wobei die erste voreingestellte Bedingung erfüllt ist, wenn sich die Fahrzeugposition in dem Videoeinzelbild nahe der Aufnahmeposition befindet und eine Entfernung von der Aufnahmeposition zur Fahrzeugposition kleiner als eine Schwelle ist.

11. System nach Anspruch 10, wobei das Bestimmen von Fahrzeuginformationen in dem Video durch Erkennen des Fahrzeugs in dem Video beinhaltet:

Bestimmen mindestens eines Erkennungsergebnisses des Fahrzeugs durch Erkennen des Fahrzeugs in dem mindestens einen Videoeinzelbild, wobei das mindestens eine Erkennungsergebnis des Fahrzeugs die Fahrzeuginformationen beinhaltet, die dem mindestens einen Videoeinzelbild entsprechen;
Bestimmen eines Glaubwürdigkeitsniveaus, das den Fahrzeuginformationen des Fahrzeugs zugeordnet ist, auf Basis des mindestens einen Erkennungsergebnisses;
Bestimmen, dass das Glaubwürdigkeitsniveau eine zweite voreingestellte Bedingung erfüllt; und
Bestimmen der Fahrzeuginformationen des Fahrzeugs, die dem Glaubwürdigkeitsniveau zugeordnet sind.

12. System nach Anspruch 10, wobei das Detektionsergebnis angibt, ob das Fahrzeug ein Nummernschild beinhaltet; und
das Bestimmen des Detektionsergebnisses des Fahrzeugs auf Basis der Fahrzeuginformationen beinhaltet:

Bestimmen, auf Basis der Fahrzeuginformationen, ob das Nummernschild des Fahrzeugs verfügbar ist;
in Reaktion auf das Bestimmen, dass das Nummernschild des Fahrzeugs nicht verfügbar ist, Bestimmen, ob anhand des Videos eine zweite Detektion des Nummernschilds des Fahrzeugs durchgeführt werden soll;
in Reaktion auf das Bestimmen, dass anhand des Videos die zweite Detektion des Nummernschilds des Fahrzeugs durchgeführt werden soll, Bestimmen von zweiten Fahrzeuginformationen in dem Video durch Fortsetzen des Erkennens des Fahrzeugs in mindestens einem anderen Videoeinzelbild des Videos, und Bestimmen des Detektionsergebnisses des Fahrzeugs auf Basis der zweiten Fahrzeuginformationen;
in Reaktion auf das Bestimmen, dass die zweite Detektion nicht durchgeführt werden soll, Bestimmen, dass das Detektionsergebnis des Fahrzeugs angibt, dass das Fahrzeug das Nummernschild nicht aufweist.

13. Nichtflüchtiges computerlesbares Medium, das mindestens einen Satz Anweisungen zur Fahrzeugdetektion umfasst, wobei der mindestens eine Satz Anweisungen, wenn er von mindestens einen Prozessor einer Rechenvorrichtung ausgeführt wird, die Rechenvorrichtung dazu bringt, ein Verfahren durchzuführen, wobei das Verfahren umfasst:

Erhalten eines Videos eines Bereichs;
Bestimmen von Fahrzeuginformationen in dem Video durch Erkennen eines Fahrzeugs in dem Video; und
Bestimmen eines Detektionsergebnisses des Fahrzeugs auf Basis der Fahrzeuginformationen, was Folgendes beinhaltet:

Bestimmen einer Kategorie mindestens eines Abschnitts des Fahrzeugs in dem Bereich auf Basis der Fahrzeuginformationen, wobei die Kategorie eines von einer Fahrzeugfront und einem Fahrzeugheck beinhaltet;
Bestimmen einer Aufnahmeposition in dem Bereich auf Basis der Kategorie, wobei die Aufnahmeposition eines von einer ersten Aufnahmeposition und einer zweiten Aufnahmeposition beinhaltet, wobei die erste Aufnahmeposition und die zweite Aufnahmeposition eine einfahrende Aufnahmeposition und eine ausfahrende Aufnahmeposition sind;
Bestimmen einer Positionsbeziehung zwischen einer Fahrzeugposition und der Aufnahmeposition in dem Bereich, die mindestens einem Videoeinzelbild entspricht, auf Basis der Fahrzeuginformationen; und
Bestimmen eines Videoeinzelbildes, das der Positionsbeziehung entspricht, die eine erste voreingestellte Bedingung erfüllt, als Aufnahmebild des Fahrzeugs, wobei die erste voreingestellte Bedingung erfüllt ist, wenn sich die Fahrzeugposition in dem Videoeinzelbild nahe der Aufnahmeposition befindet und eine Entfernung von der Aufnahmeposition zur Fahrzeugposition kleiner als eine Schwelle ist.

## Revendications

1. Procédé de détection de véhicule, comprenant :

l'obtention d'une vidéo d'une région ;
la détermination d'informations de véhicule dans la vidéo en reconnaissant un véhicule dans la vidéo ; et

la détermination d'un résultat de détection du véhicule sur la base des informations de véhicule, incluant :

la détermination d'une catégorie d'au moins une partie du véhicule dans la région sur la base des informations de véhicule, dans lequel la catégorie inclut l'une d'une tête de véhicule et d'une queue de véhicule ;

la détermination d'une position d'accrochage dans la région sur la base de la catégorie, la position d'accrochage inclut l'une d'une première position d'accrochage et d'une seconde position d'accrochage, la première position d'accrochage et la seconde position d'accrochage étant une position d'accrochage entrante et une position d'accrochage sortante ;

la détermination d'une relation de position entre une position de véhicule et la position d'accrochage dans la région correspondant à au moins une trame vidéo sur la base des informations de véhicule ; et

la détermination d'une trame vidéo correspondant à la relation de position qui satisfait à une première condition prédéfinie en tant qu'image d'accrochage du véhicule, la première condition prédéfinie étant satisfaite lorsque la position du véhicule dans la trame vidéo est proche de la position d'accrochage et qu'une distance de la position d'accrochage à la position du véhicule est inférieure à un seuil.

2. Procédé selon la revendication 1, dans lequel la détermination d'informations de véhicule dans la vidéo en reconnaissant le véhicule dans la vidéo inclut :

la détermination d'au moins un résultat de reconnaissance du véhicule en reconnaissant le véhicule dans la au moins une trame vidéo, dans lequel le au moins un résultat de reconnaissance du véhicule inclut les informations de véhicule correspondant à la au moins une trame vidéo ;

la détermination d'un niveau de crédibilité associé aux informations de véhicule du véhicule sur la base du au moins un résultat de reconnaissance ;

la détermination du fait que le niveau de crédibilité satisfait à une seconde condition prédéfinie ; et

la détermination des informations de véhicule du véhicule associées au niveau de crédibilité.

3. Procédé selon la revendication 2, dans lequel la détermination du niveau de crédibilité associé aux informations de véhicule du véhicule sur la base du au moins un résultat de reconnaissance inclut :

la détermination du niveau de crédibilité associé aux informations de véhicule du véhicule sur la base d'un décompte d'informations de véhicule cible dans une pluralité de résultats de reconnaissance correspondant à une pluralité de trames vidéo.

4. Procédé selon la revendication 1, dans lequel le résultat de détection indique si le véhicule inclut une plaque d'immatriculation ; et

la détermination du résultat de détection du véhicule sur la base des informations de véhicule inclut :

la détermination du fait que la plaque d'immatriculation du véhicule est ou non disponible sur la base des informations de véhicule ;

en réponse à la détermination du fait que la plaque d'immatriculation du véhicule n'est pas disponible, la détermination du fait qu'il faut ou non effectuer une seconde détection sur la plaque d'immatriculation du véhicule à partir de la vidéo ;

en réponse à la détermination du fait qu'il faut effectuer la seconde détection sur la plaque d'immatriculation du véhicule à partir de la vidéo, la détermination de secondes informations de véhicule dans la vidéo en continuant à reconnaître le véhicule dans au moins une autre trame vidéo de la vidéo, et la détermination du résultat de détection du véhicule sur la base des secondes informations de véhicule ;

en réponse à la détermination du fait qu'il ne faut pas effectuer la seconde détection, la détermination du résultat de détection du véhicule indiquant que le véhicule ne présente pas la plaque d'immatriculation.

5. Procédé selon la revendication 4, dans lequel la détermination du fait qu'il faut ou non effectuer la seconde détection inclut :

la détermination du fait que le véhicule est ou non en marche arrière ;

en réponse à la détermination du fait que le véhicule est en marche arrière, la détermination qu'il faut effectuer la seconde détection ; ou

en réponse à la détermination du fait que le véhicule n'est pas en marche arrière, la détermination qu'il ne faut pas effectuer la seconde détection.

**6.** Procédé selon la revendication 1, dans lequel le résultat de détection inclut une direction de déplacement du véhicule ; et
la détermination du résultat de détection du véhicule sur la base des informations de véhicule inclut :

la détermination d'informations de position du véhicule par rapport à une position de référence dans la région sur la base des informations de véhicule ; et
la détermination de la direction de déplacement du véhicule sur la base des informations de position du véhicule par rapport à la position de référence.

**7.** Procédé selon la revendication 1, dans lequel les informations de véhicule incluent les unes parmi des informations de plaque d'immatriculation et des informations de face de véhicule représentées dans une trame, et des informations relatives au véhicule représentées dans la trame ;

le résultat de détection inclut des informations de posture de véhicule ; et
la détermination du résultat de détection du véhicule sur la base des informations de véhicule inclut :

la détermination de la catégorie d'au moins une partie du véhicule sur la base des informations relatives au véhicule ;
la détermination d'informations d'orientation de véhicule sur la base d'au moins les unes parmi les informations de plaque d'immatriculation et les informations de face de véhicule ; et
la détermination des informations de posture de véhicule sur la base de la catégorie d'au moins une partie du véhicule et des informations d'orientation de véhicule.

**8.** Procédé selon la revendication 7, dans lequel la détermination d'informations d'orientation de véhicule sur la base d'au moins les unes parmi les informations de plaque d'immatriculation et les informations de face de véhicule inclut :

la détermination de la position de véhicule sur la base des informations relatives au véhicule ;
la détermination des informations d'orientation de véhicule par au moins l'un des deux procédés suivants :

la détermination d'une position de plaque d'immatriculation dans la trame vidéo sur la base des informations de plaque d'immatriculation, et la détermination des informations d'orientation de véhicule sur la base de la position de plaque d'immatriculation et de la position de véhicule ; et
la détermination d'une position de face de véhicule dans la trame vidéo sur la base des informations de face de véhicule, et la détermination des informations d'orientation de véhicule sur la base de la position de face de véhicule et de la position de véhicule.

**9.** Procédé selon la revendication 1, dans lequel la détermination des informations de véhicule dans la vidéo en reconnaissant le véhicule dans la vidéo inclut :

la détermination du fait que le véhicule dans la région se trouve ou non dans une région effective en reconnaissant le véhicule dans la au moins une trame vidéo de la vidéo ; et
la détermination des informations de véhicule pour le véhicule dans la région effective dans la région.

**10.** Système de détection de véhicule, comprenant :

au moins un support de stockage incluant un ensemble d'instructions ; et
au moins un processeur configuré pour communiquer avec le au moins un support de stockage, dans lequel, lors de l'exécution de l'ensemble d'instructions, le au moins un processeur est amené à :

obtenir une vidéo d'une région ;
déterminer des informations de véhicule dans la vidéo en reconnaissant un véhicule dans la vidéo ; et
déterminer un résultat de détection du véhicule sur la base des informations de véhicule, incluant :

la détermination d'une catégorie d'au moins une partie du véhicule dans la région sur la base des informations de véhicule, dans lequel la catégorie inclut l'une d'une tête de véhicule et d'une queue de véhicule ;
la détermination d'une position d'accrochage dans la région sur la base de la catégorie, la position d'accrochage inclut l'une d'une première position d'accrochage et d'une seconde position d'accrochage, la première position d'accrochage et la seconde position d'accrochage étant une position d'accrochage entrante et une position d'accrochage sortante ;

la détermination d'une relation de position entre une position de véhicule et la position d'accrochage dans la région correspondant à au moins une trame vidéo sur la base des informations de véhicule ; et la détermination d'une trame vidéo correspondant à la relation de position qui satisfait à une première condition prédéfinie en tant qu'image d'accrochage du véhicule, la première condition prédéfinie étant satisfaite lorsque la position du véhicule dans la trame vidéo est proche de la position d'accrochage et qu'une distance de la position d'accrochage à la position du véhicule est inférieure à un seuil.

11. Système selon la revendication 10, dans lequel la détermination d'informations de véhicule dans la vidéo en reconnaissant le véhicule dans la vidéo inclut :

la détermination d'au moins un résultat de reconnaissance du véhicule en reconnaissant le véhicule dans la au moins une trame vidéo, dans lequel le au moins un résultat de reconnaissance du véhicule inclut les informations de véhicule correspondant à la au moins une trame vidéo ;
la détermination d'un niveau de crédibilité associé aux informations de véhicule du véhicule sur la base du au moins un résultat de reconnaissance ;
la détermination du fait que le niveau de crédibilité satisfait à une seconde condition prédéfinie ; et la détermination des informations de véhicule du véhicule associées au niveau de crédibilité.

12. Système selon la revendication 10, dans lequel le résultat de détection indique si le véhicule inclut une plaque d'immatriculation ; et
la détermination du résultat de détection du véhicule sur la base des informations de véhicule inclut :

la détermination du fait que la plaque d'immatriculation du véhicule est ou non disponible sur la base des informations de véhicule ;
en réponse à la détermination du fait que la plaque d'immatriculation du véhicule n'est pas disponible, la détermination du fait qu'il faut ou non effectuer une seconde détection sur la plaque d'immatriculation du véhicule à partir de la vidéo ;
en réponse à la détermination du fait qu'il faut effectuer la seconde détection sur la plaque d'immatriculation du véhicule à partir de la vidéo, la détermination de secondes informations de véhicule dans la vidéo en continuant à reconnaître le véhicule dans au moins une autre trame vidéo de la vidéo, et la détermination du résultat de détection du véhicule sur la base des secondes informations de véhicule ;
en réponse à la détermination du fait qu'il ne faut pas effectuer la seconde détection, la détermination du résultat de détection du véhicule indiquant que le véhicule ne présente pas la plaque d'immatriculation.

13. Support non transitoire lisible par ordinateur, comprenant au moins un ensemble d'instructions pour la détection de véhicule, dans lequel, lorsqu'il est exécuté par au moins un processeur d'un dispositif informatique, le au moins un ensemble d'instructions amène le dispositif informatique à réaliser un procédé, le procédé comprenant :

l'obtention d'une vidéo d'une région ;
la détermination d'informations de véhicule dans la vidéo en reconnaissant un véhicule dans la vidéo ; et la détermination d'un résultat de détection du véhicule sur la base des informations de véhicule, incluant :

la détermination d'une catégorie d'au moins une partie du véhicule dans la région sur la base des informations de véhicule, dans lequel la catégorie inclut l'une d'une tête de véhicule et d'une queue de véhicule ;
la détermination d'une position d'accrochage dans la région sur la base de la catégorie, la position d'accrochage inclut l'une d'une première position d'accrochage et d'une seconde position d'accrochage, la première position d'accrochage et la seconde position d'accrochage étant une position d'accrochage entrante et une position d'accrochage sortante ;
la détermination d'une relation de position entre une position de véhicule et la position d'accrochage dans la région correspondant à au moins une trame vidéo sur la base des informations de véhicule ; et la détermination d'une trame vidéo correspondant à la relation de position qui satisfait à une première condition prédéfinie en tant qu'image d'accrochage du véhicule, la première condition prédéfinie étant satisfaite lorsque la position du véhicule dans la trame vidéo est proche de la position d'accrochage et qu'une distance de la position d'accrochage à la position du véhicule est inférieure à un seuil.

29

<u>100</u>

**FIG. 1**

200

a video of a region may be obtained
S210

vehicle information in the video may be
determined by recognizing a vehicle in the video
S220

the detection result of the vehicle may be
determined based on the vehicle information
S230

FIG. 2

300

a detection result of a license plate of the vehicle
may be determined based on the vehicle
information
S310

whether the vehicle
includes a license
plate
S320

NO

in response to determining that the license
plate of the vehicle is unavailable,
determining whether to perform a second
detection on the license plate of the
vehicle from the video
S320

NO

YES

determine that the
vehicle does not
have a license
plate
S320

determine the vehicle information in the video by
continuing to recognize the vehicle in the at least
one other video frame of the video, and
determining the second detection on the license
plate of the vehicle based on the vehicle
information
S320

**FIG. 3**

**400**

determining a category of at least a portion of the
vehicle in the region based on the vehicle
information
S410

determining a snap position in the region based
on the category, the snap position may include
one of a first snap position and a second snap
position
S420

determining a positional relationship between a
vehicle position and the snap position in the
region corresponding to the at least one video
frame based on the vehicle information
S430

whether the positional
relationship that meets a
preset condition
S430

YES

determining a video frame corresponding to the
positional relationship that meets a preset
condition as a snap image of the vehicle
S432

**FIG. 4**

500

determining position information of the vehicle
relative to a reference position in the region based
on the vehicle information
S510

determining the travel direction of the vehicle
based on the position information of the vehicle
relative to the reference position
S520

**FIG. 5**

600

determining a category of at least a
portion of the vehicle based on the
vehicle related information
S610

choosing to executeS622 or S624, or
execute both S622 and S624

determining a license plate position
in the video frame based on the
license plate information, and
determining the vehicle orientation
information based on the license plate
position and the vehicle position
S622

determining a vehicle face position in
the video frame based on the vehicle
face information, and determining the
vehicle orientation information based
on the vehicle face position and the
vehicle position
S624

determining the vehicle posture
information based on the vehicle
category and the vehicle orientation
information
S630

FIG. 6

<u>**700**</u>

a target surveillance image group may be formed based on obtaining snaped surveillance images continuously　　S11

a tail light flag of the target surveillance image group may be obtained　　S12

the vehicle displacement vector based on the target surveillance image group and a displacement flag may be obtained based on the vehicle displacement vector　　S13

the vehicle window flag position may be obtained based on the target surveillance image group　　S14

a coding sequence may be formed based on using the displacement flag bit, the window flag bit, and the tail light flag bit, and the vehicle state of the target vehicle may be obtained according to the coding value of the coding sequence　　S15

**FIG. 7**

FIG. 8

FIG. 9

$P_2(x_2,y_2)$

$P(x,y)$    L    M    $P_t(x_t, y_t)$

N    $P_1(x_1,y_1)$

**FIG. 10**

## 1100

the category flag of the target vehicle in the target surveillance image group and the vehicle box and/or the license plate box through the target detection model may be obtained

S21

when the tail light flag bit and the category flag bit are both the first preset state value, the first snap line is activated

S22

when the tail light mark is located at the category flag and the second preset state value, or one of them is the first preset state value and the other is the second preset state value, the second snap line is activated

S23

the vehicle displacement vector in the target surveillance image group may be obtained based on the first snap line or the second snap line

S24

**FIG. 11**

FIG. 12

Vehicle deflection

Vehicle head and tail          Orientation angle

**FIG. 13**

P_od(x_od, y_od)

θ

P_pd(x_pd, y_pd)

**FIG. 14**

53

52

**1500**

Input and output
device

memory

bus 4

processor

51

**FIG. 15**

**1600**

computer storage
medium

computer
program

61

**FIG. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110553813
- CN 112115904 A

- JP 2004234486 A